# EUROPEAN PATENT APPLICATION

(11) **EP 4 772 961 A1**
(43) Date of publication of application: **08.07.2026**
(21) Application number: 24885981.1
(22) Date of filing: 14.08.2024
(51) Int. Cl.: G06F 1/16, H01F 7/02

(54) **MULTI-FOLDABLE ELECTRONIC DEVICE COMPRISING MAGNET**

(30) Priority: 30.10.2023 KR 20230147143; 27.11.2023 KR 20230166549
(71) Applicant: Samsung Electronics Co., Ltd., Suwon-si, Gyeonggi-do 16677 (KR)
(72) Inventor: KIM, Byoungjun, Suwon-si, Gyeonggi-do 16677 (KR); LEE, Junyoung, Suwon-si, Gyeonggi-do 16677 (KR); CHOI, Junyoung, Suwon-si, Gyeonggi-do 16677 (KR)
(74) Representative: Nederlandsch Octrooibureau
(86) International application number: PCT/KR2024/012122
(87) International publication number: WO 2025/095301

(57) **Abstract**

A multi-foldable electronic device, according to various embodiments of the present invention, may comprise: a first housing including a first magnet assembly movable to a first position and a second position; a second housing foldably coupled to a first side of the first housing and including a second magnet assembly; a third housing foldably coupled to a second side of the first housing; a first hinge structure coupled between the first housing and the second housing; and a second hinge structure coupled between the first housing and the third housing, wherein when the angle between the first housing and the third housing is a first angle, the first magnet assembly may be disposed at the first position, and when the angle between the first housing and the third housing is a second angle, the first magnet assembly may move to the second position, and the first magnet assembly and the second magnet assembly may be disposed to face each other so as to have substantially the same polarity.

## Description

### [Technical Field]

Various embodiments of the disclosure disclose a multi-foldable electronic device including at least one magnet.

### [Background Art]

The use of foldable electronic devices that are folded and unfolded horizontally or vertically is increasing, and various functions are provided to foldable electronic devices.

The foldable electronic device may include a first housing and a second housing that may be operated in a folded state or an unfolded state around a hinge structure (e.g., a hinge module).

The foldable electronic device may be operated in an in-folding and/or out-folding manner, for example, by rotating the first housing and the second housing using the hinge structure.

### [Disclosure of Invention]

### [Technical Problem]

The user demand for expansion of displays of foldable electronic devices is increasing. The foldable electronic device may be implemented in the form of a multi-foldable electronic device including a first housing, a second housing, and a third housing.

The multi-foldable electronic device may include a flexible display that is disposed across at least a portion of the first housing, the second housing, and the third housing.

The multi-foldable electronic device may be configured such that the first housing, the second housing, and the third housing operate in an in-folding and/or out-folding manner by using a first hinge structure (e.g., a first hinge module) and a second hinge structure (e.g., a second hinge module).

The first housing, the second housing, and the third housing of the multi-foldable electronic device may be configured to maintain a folded state using at least one magnet.

According to an embodiment, in the multi-foldable electronic device, for example, the second housing may be folded first relative to the first housing disposed in the middle, and the third housing may be folded thereafter. For example, a user of the multi-foldable electronic device may unfold the second housing from the first housing by using a finger in a state in which the third housing is unfolded first relative to the first housing. For example, when a user unfolds the second housing from the first housing in a state in which the first housing and the second housing are folded using magnets, the flexible display may be damaged by the user's fingernail or may be contaminated by fingerprints.

Various embodiments of the disclosure may provide a multi-foldable electronic device configured to allow the second housing to be easily unfolded from the first housing by moving a position of a first magnet disposed in the first housing in response to rotational movement of a hinge structure (e.g., a second hinge structure) such that the first magnet is arranged to have substantially the same polarity as a second magnet disposed in the second housing.

The technical problems to be addressed by this disclosure are not limited to those described above, and other technical problems not mentioned above may be clearly understood by a person ordinarily skilled in the related art to which the disclosure pertains.

### [Solution to Problem]

According to an embodiment of the disclosure, a multi-foldable electronic device may include a first housing that includes a first magnet assembly that is movable to a first position and a second position, a second housing that is foldably coupled to a first side of the first housing and includes a second magnet assembly, and a third housing that is foldably coupled to a second side of the first housing. According to an embodiment, the multi-foldable electronic device may include a first hinge structure that is coupled between the first housing and the second housing, and a second hinge structure that is coupled between the first housing and the third housing. According to an embodiment, the multi-foldable electronic device may be configured such that the first magnet assembly is disposed at the first position when an angle between the first housing and the third housing is a first angle. According to an embodiment, the multi-foldable electronic device may be configured such that when an angle between the first housing and the third housing is a second angle, the first magnet assembly moves to the second position, and the first magnet assembly and the second magnet assembly are arranged to face each other with substantially the same polarity.

### [Advantageous Effects of Invention]

According to various embodiments of the disclosure, in response to rotational movement of a hinge structure (e.g., the second hinge structure) that rotates in response to folding and unfolding of the third housing, the first magnet of the first housing may be arranged to have substantially the same polarity as the second magnet of the second housing, thereby allowing the second housing to be easily unfolded from the first housing.

In addition, various effects directly or indirectly understood through this document may be provided.

### [Brief Description of Drawings]

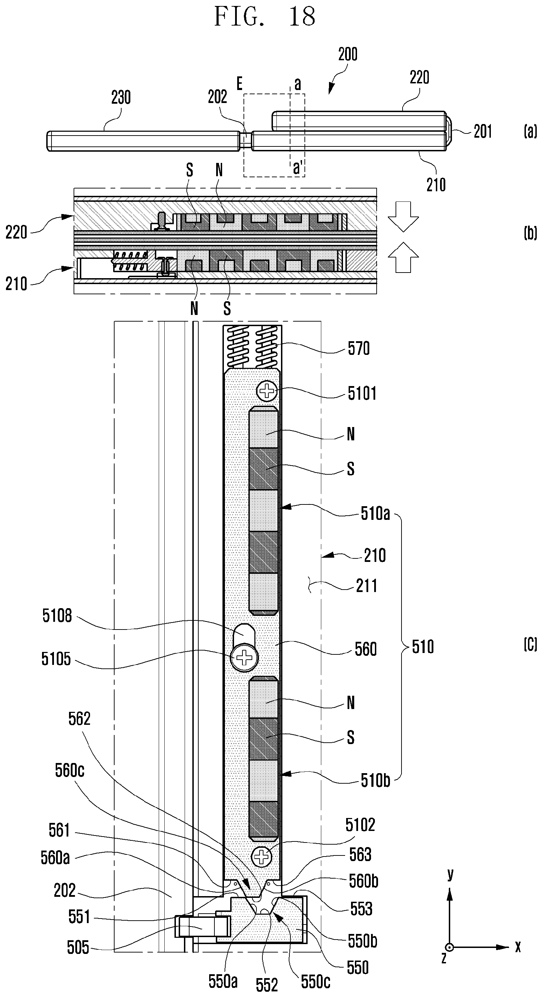

In connection with the description of the drawings, the same or similar components may be denoted by the same or similar reference numerals.
FIG. 1 is a block diagram of an electronic device in a network environment, according to various embodiments of the disclosure.
FIG. 2A is a schematic front view illustrating a multi-foldable electronic device according to an embodiment of the disclosure in an unfolded state.
FIG. 2B is a schematic rear view illustrating the multi-foldable electronic device according to an embodiment of the disclosure in the unfolded state.
FIG. 3 is a view schematically illustrating a state in which a first housing and a second housing of the multi-foldable electronic device according to an embodiment of the disclosure are folded to each other.
FIG. 4 is a view schematically illustrating a state in which the first housing, the second housing, and a third housing of the multi-foldable electronic device according to an embodiment of the disclosure are folded to each other.
FIG. 5 is a schematic front view illustrating a multi-foldable electronic device including at least one magnet according to an embodiment of the disclosure, in an unfolded state.
FIG. 6 is an enlarged view schematically illustrating area A of the multi-foldable electronic device in FIG. 5 according to an embodiment of the disclosure.
FIG. 7 is an enlarged view schematically illustrating area B of the multi-foldable electronic device in FIG. 6 according to an embodiment of the disclosure.
FIG. 8 is a schematic view illustrating a state in which a link is removed from the multi-foldable electronic device in FIG. 7 according to an embodiment of the disclosure.
FIG. 9 is a schematic view illustrating the link included in a multi-foldable electronic device according to an embodiment of the disclosure.
FIG. 10 is a schematic view illustrating a groove formed in the first housing of the multi-foldable electronic device according to an embodiment of the disclosure.
FIG. 11 is a view schematically illustrating a molded member applied to at least one magnet assembly of a multi-foldable electronic device according to an embodiment of the disclosure.
FIG. 12 is a view schematically illustrating a shielded magnet applied to at least one magnet of a multi-foldable electronic device according to an embodiment of the disclosure.
FIG. 13 is a view schematically illustrating a Halbach magnet applied to at least one magnet of a multi-foldable electronic device according to an embodiment of the disclosure.
FIG. 14 is a view schematically illustrating how a first magnet assembly is disposed when a first housing and a third housing are unfolded to form a first angle therebetween in a multi-foldable electronic device according to an embodiment of the disclosure.
FIG. 15 is a view schematically illustrating portion C of the multi-foldable electronic device in FIG. 14 according to an embodiment of the disclosure.
FIG. 16 is a view schematically illustrating how the first magnet assembly is disposed when the first housing and the third housing are folded to form a second angle therebetween in the multi-foldable electronic device according to an embodiment of the disclosure.
FIG. 17 is a view schematically illustrating portion D of the multi-foldable electronic device in FIG. 16 according to an embodiment of the disclosure.
   (a) of FIG. 18 is a view schematically illustrating the multi-foldable electronic device according to an embodiment of the disclosure when the second housing is folded relative to the first housing and the third housing is unfolded to form the first angle relative to the first housing.
   (b) of FIG. 18 is a view schematically illustrating portion E of the multi-foldable electronic device in (a) of FIG. 18 according to an embodiment of the disclosure.
   (c) of FIG. 18 is a view schematically illustrating a state in which a bracket is disposed in a first direction when the first housing and the third housing are unfolded to form the first angle therebetween in the multi-foldable electronic device in (a) of FIG. 18 according to an embodiment of the disclosure.

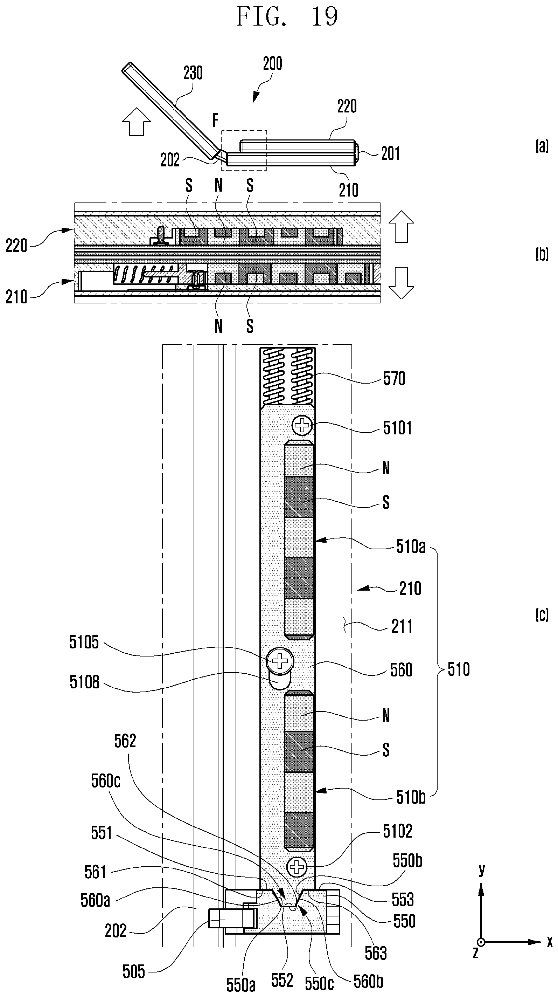

   (a) of FIG. 19 is a view schematically illustrating the multi-foldable electronic device according to an embodiment of the disclosure when the second housing is folded relative to the first housing and the third housing is folded to form the second angle relative to the first housing.
   (b) of FIG. 19 is a view schematically illustrating portion F of the multi-foldable electronic device in (a) of FIG. 19, according to an embodiment of the disclosure.
   (c) of FIG. 19 is a view schematically illustrating a state in which the bracket is disposed in a second direction when the first housing and the third housing are folded to form the second angle therebetween in the multi-foldable electronic device in (a) of FIG. 19 according to an embodiment of the disclosure.

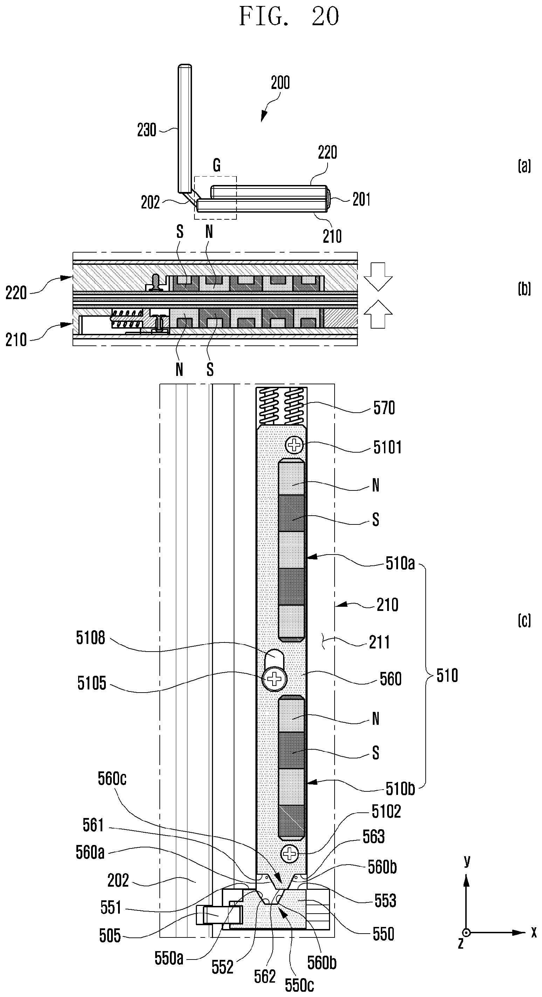

   (a) of FIG. 20 is a view schematically illustrating the multi-foldable electronic device according to an embodiment of the disclosure when the second housing is folded relative to the first housing and the third housing is folded to form a third angle relative to the first housing.
   (b) of FIG. 20 is a view schematically illustrating portion G of the multi-foldable electronic device in (a) of FIG. 20 according to an embodiment of the disclosure.
   (c) FIG. 20 is a view schematically illustrating a state in which the bracket is disposed in the first direction when the first housing and the third housing are folded to form the third angle therebetween in the multi-foldable electronic device in (a) of FIG. 20 according to an embodiment of the disclosure.

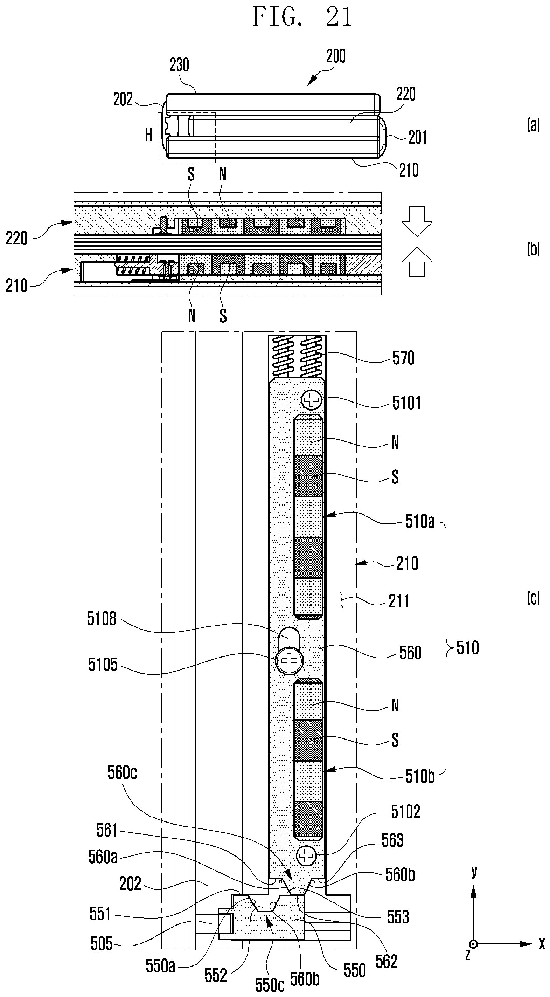

   (a) of FIG. 21 is a view schematically illustrating the multi-foldable electronic device according to an embodiment of the disclosure when the second housing is folded relative to the first housing and the third housing is folded to form a fourth angle relative to the first housing.
   (b) of FIG. 21 is a view schematically illustrating portion H of the multi-foldable electronic device illustrated in (a) of FIG. 21 according to an embodiment of the disclosure.
   (c) FIG. 21 is a view schematically illustrating a state in which the bracket is disposed in the first direction when the first housing and the third housing are folded to form the fourth angle therebetween in the multi-foldable electronic device in (a) of FIG. 21 according to an embodiment of the disclosure.

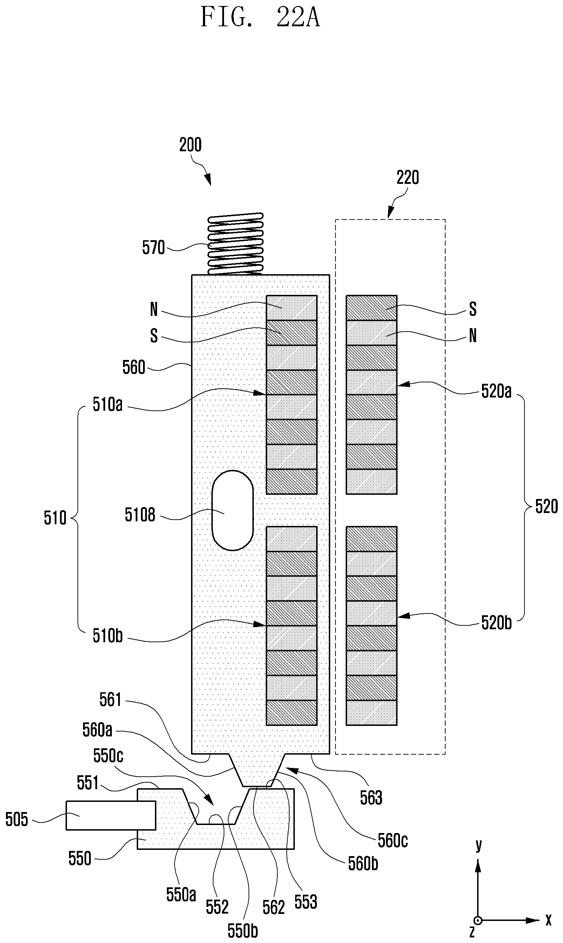

FIG. 22A is a view schematically illustrating an operation of an elastic member and a bracket in a state in which the third housing is folded to form about 90° relative to the first housing in the multi-foldable electronic device according to an embodiment of the disclosure.

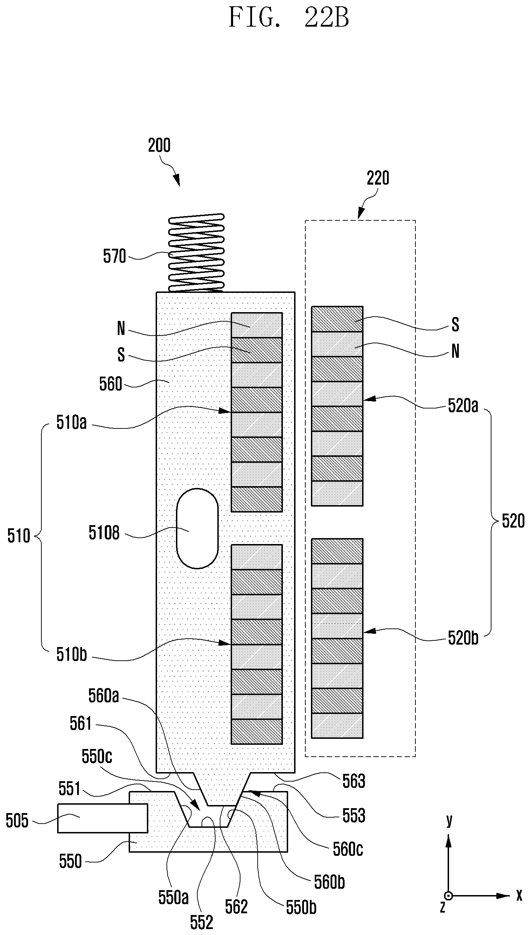

FIG. 22B is a view schematically illustrating an operation of the elastic member and the bracket in a state in which the third housing is unfolded to form about 110° relative to the first housing in the multi-foldable electronic device according to an embodiment of the disclosure.

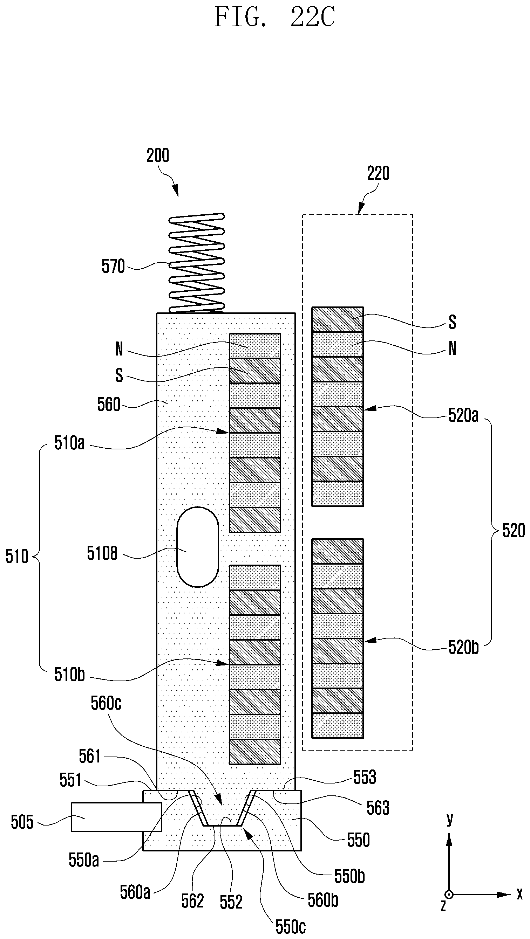

FIG. 22C is a view schematically illustrating an operation of the elastic member and the bracket in a state in which the third housing is unfolded to form about 135° relative to the first housing in the multi-foldable electronic device according to an embodiment of the disclosure.

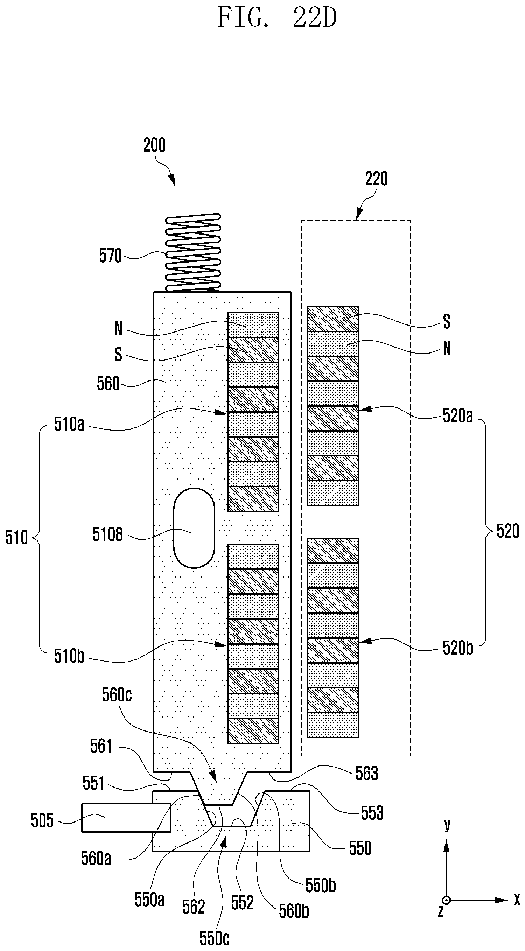

FIG. 22D is a view schematically illustrating an operation of the elastic member and the bracket in a state in which the third housing is unfolded to form about 160° relative to the first housing in the multi-foldable electronic device according to an embodiment of the disclosure.

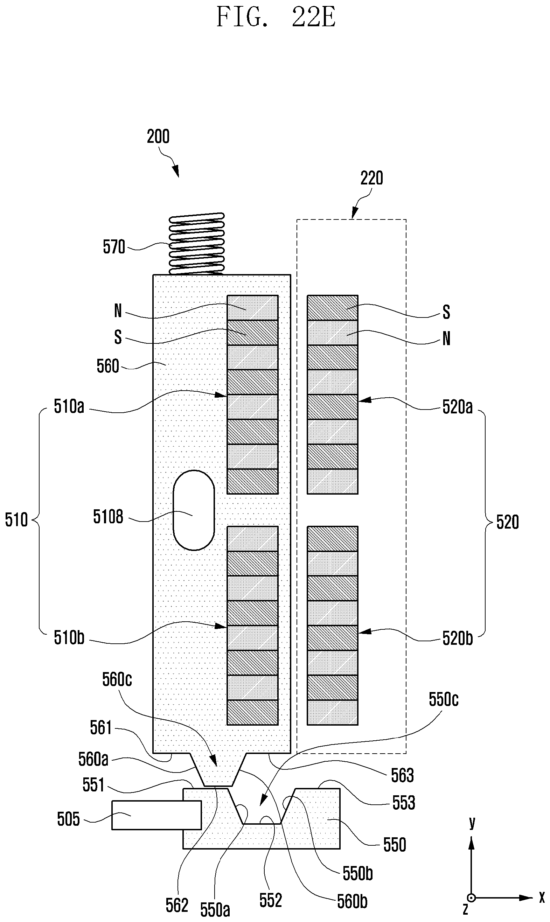

FIG. 22E is a view schematically illustrating an operation of the elastic member and the bracket in a state in which the third housing is unfolded to form about 180° relative to the first housing in the multi-foldable electronic device according to an embodiment of the disclosure.

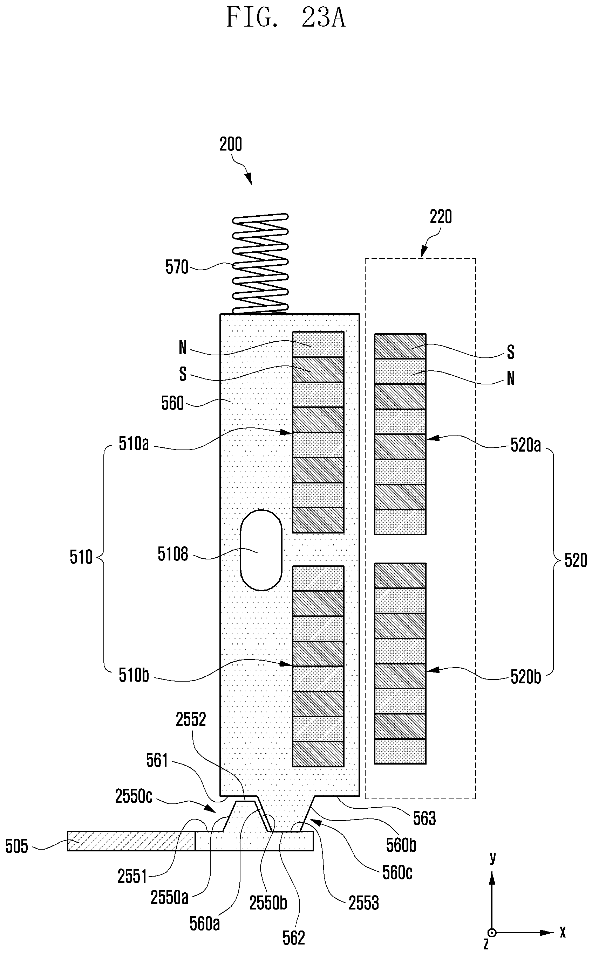

FIG. 23A is a view schematically illustrating an operation of a sliding module according to various embodiments in a state in which a third housing is folded to form about 90° relative to a first housing in a multi-foldable electronic device according to various embodiments of the disclosure.

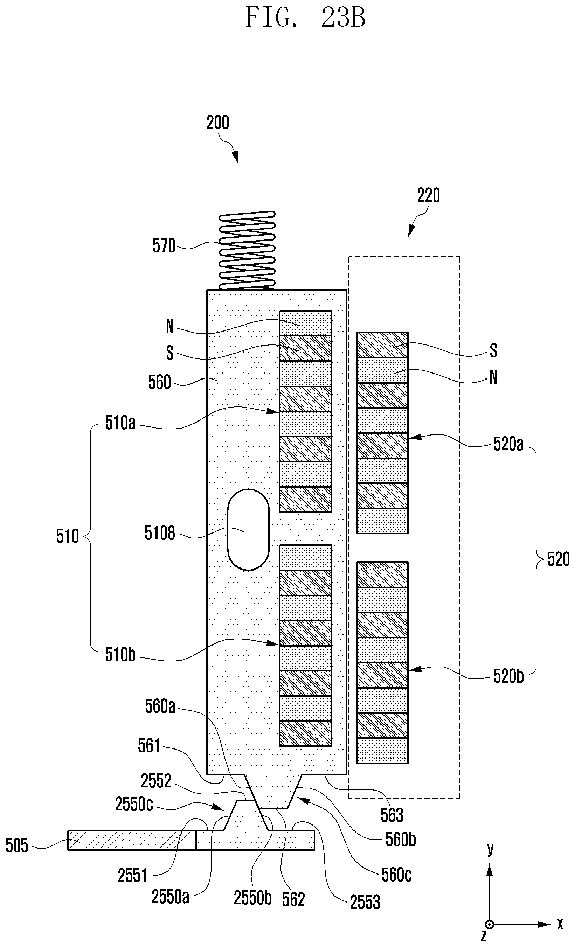

FIG. 23B is a view schematically illustrating an operation of the sliding module according to various embodiments in a state in which the third housing is unfolded to form about 110° relative to the first housing in the multi-foldable electronic device according to various embodiments of the disclosure.

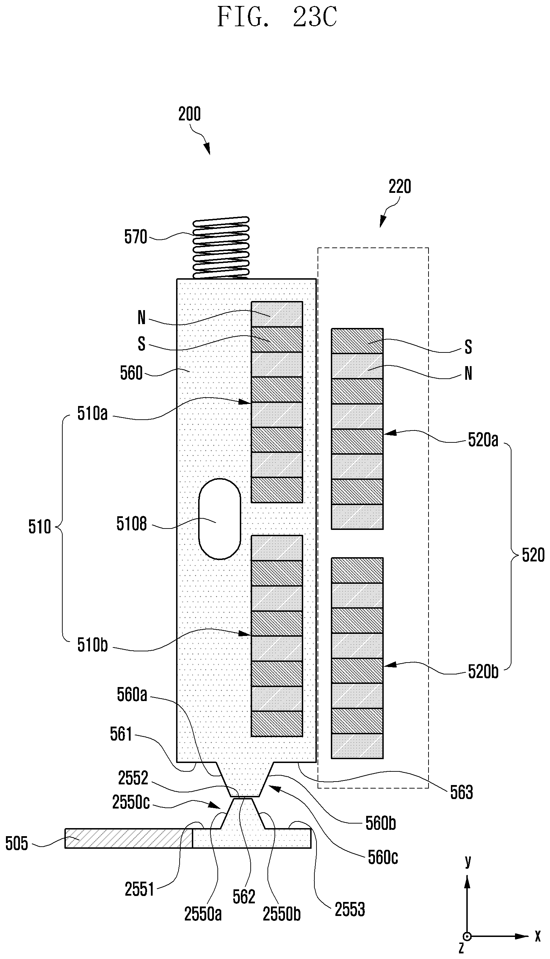

FIG. 23C is a view schematically illustrating an operation of the sliding module according to various embodiments in a state in which the third housing is unfolded to form about 135° relative to the first housing in the multi-foldable electronic device according to various embodiments of the disclosure.

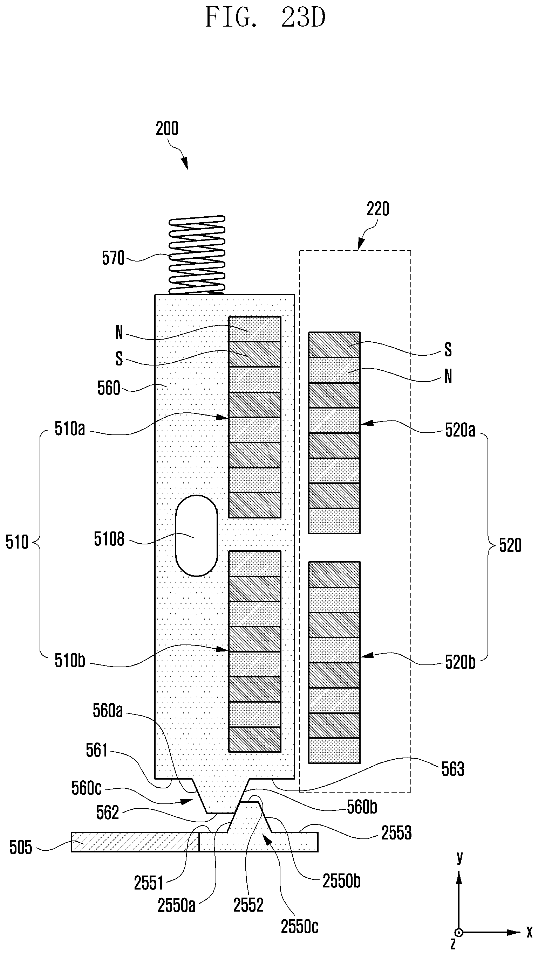

FIG. 23D is a view schematically illustrating an operation of the sliding module according to various embodiments in a state in which the third housing is unfolded to form about 160° relative to the first housing in the multi-foldable electronic device according to various embodiments of the disclosure.

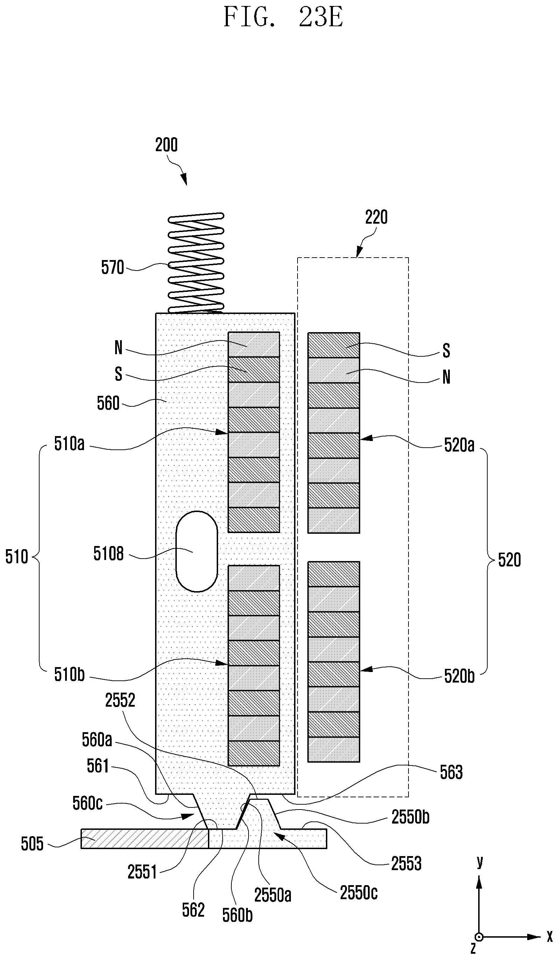

FIG. 23E is a view schematically illustrating an operation of the sliding module according to various embodiments in a state in which the third housing is unfolded to form about 180° relative to the first housing in the multi-foldable electronic device according to various embodiments of the disclosure.

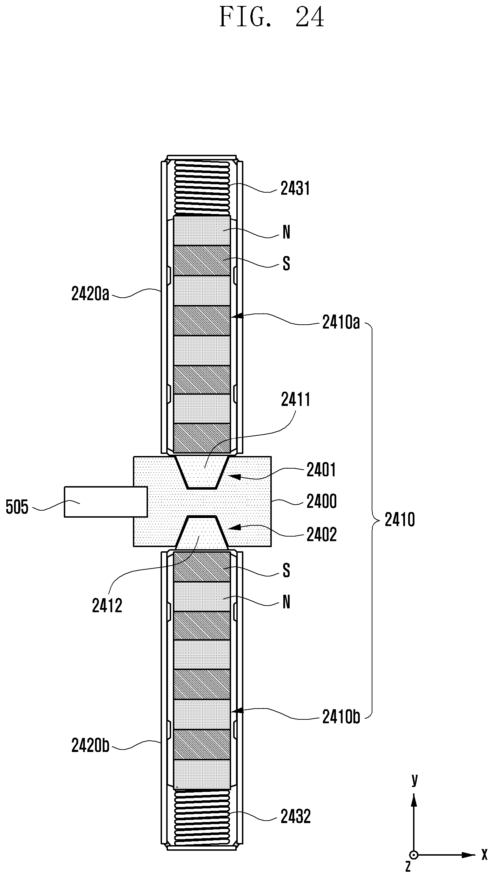

FIG. 24 is a view schematically illustrating a magnet assembly and a sliding module of a multi-foldable electronic device according to various embodiments of the disclosure.

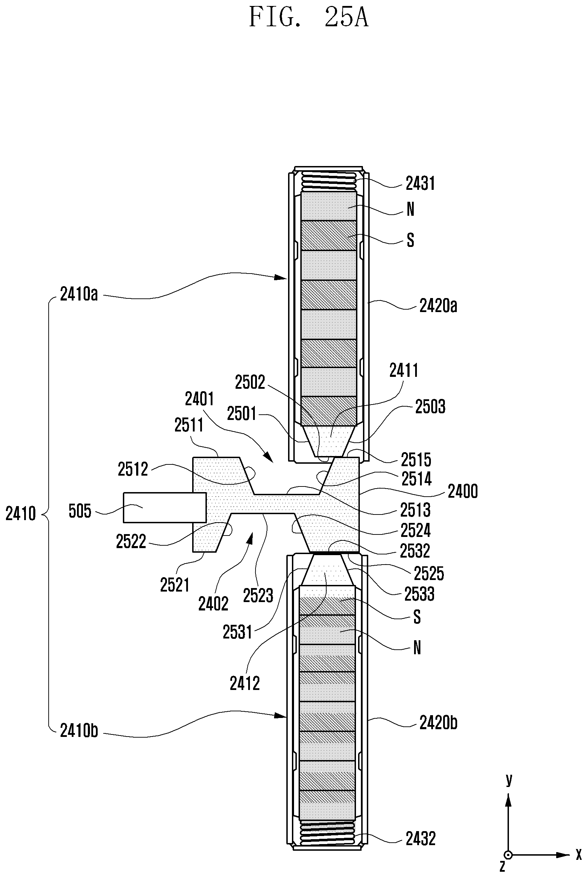

FIG. 25A is a view schematically illustrating an operation of a first magnet assembly and a sliding module according to various embodiments in a state in which a third housing is folded to form about 90° relative to a first housing in a multi-foldable electronic device according to various embodiments of the disclosure.

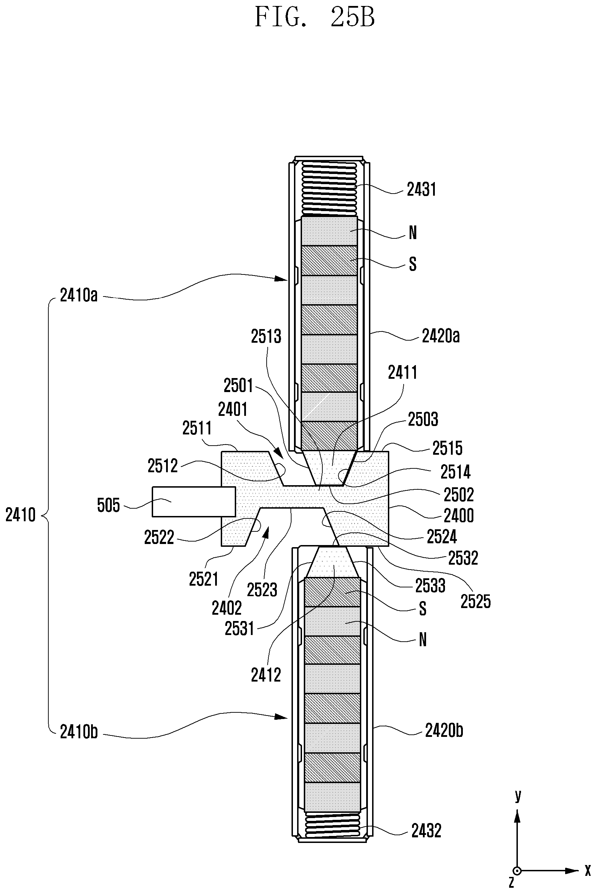

FIG. 25B is a view schematically illustrating an operation of the first magnet assembly and the sliding module according to various embodiments in a state in which the third housing is unfolded to form about 110° relative to the first housing in the multi-foldable electronic device according to various embodiments of the disclosure.

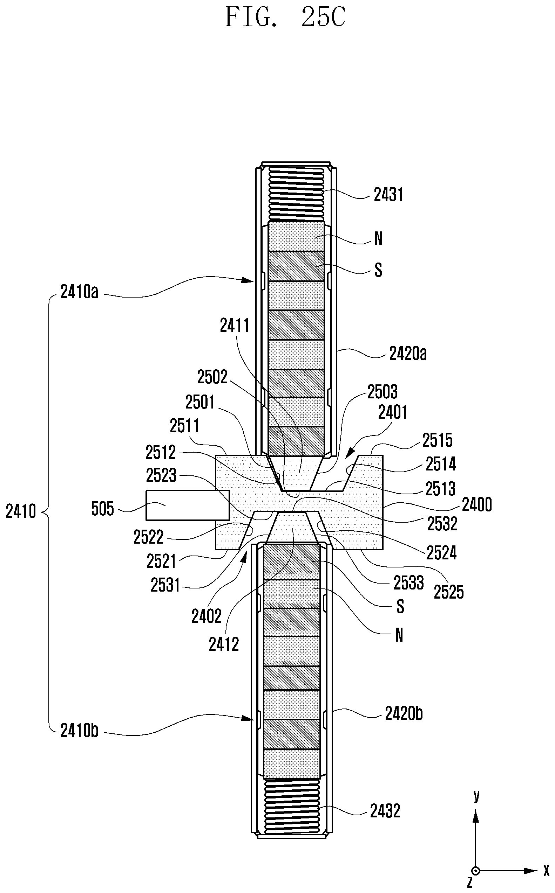

FIG. 25C is a view schematically illustrating an operation of the first magnet assembly and the sliding module according to various embodiments in a state in which the third housing is unfolded to form about 135° relative to the first housing of the multi-foldable electronic device according to various embodiments of the disclosure.

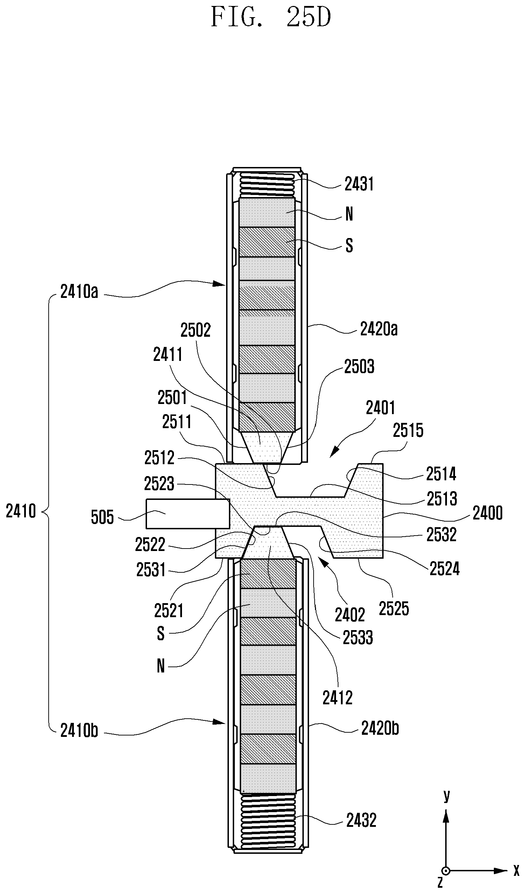

FIG. 25D is a view schematically illustrating an operation of the first magnet assembly and the sliding module according to various embodiments in a state in which the third housing is unfolded to form about 160° relative to the first housing in the multi-foldable electronic device according to various embodiments of the disclosure.

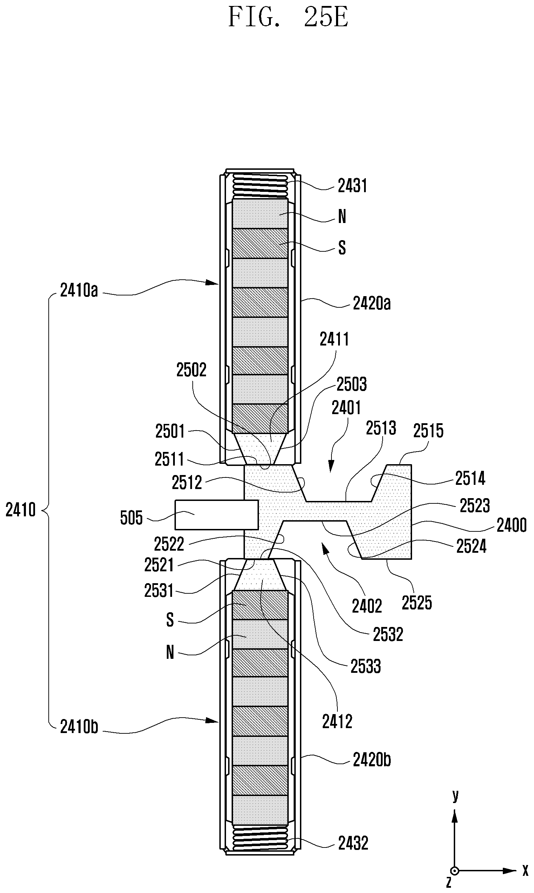

FIG. 25E is a view schematically illustrating an operation of the first magnet assembly and the sliding module according to various embodiments in a state in which the third housing is unfolded to form about 180° relative to the first housing in the multi-foldable electronic device according to various embodiments of the disclosure.

### [Mode for the Invention]

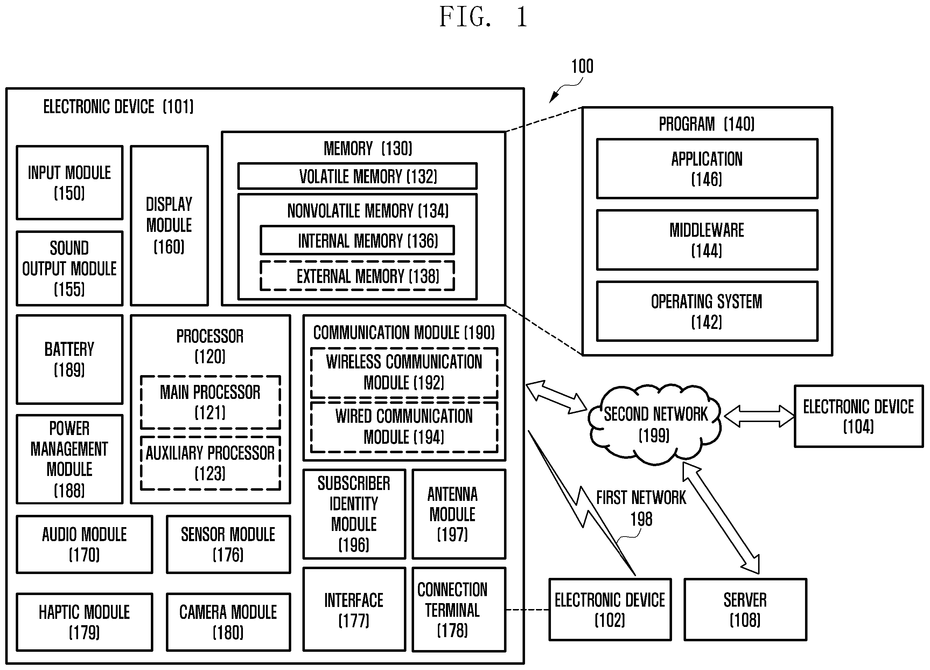

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{TM}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

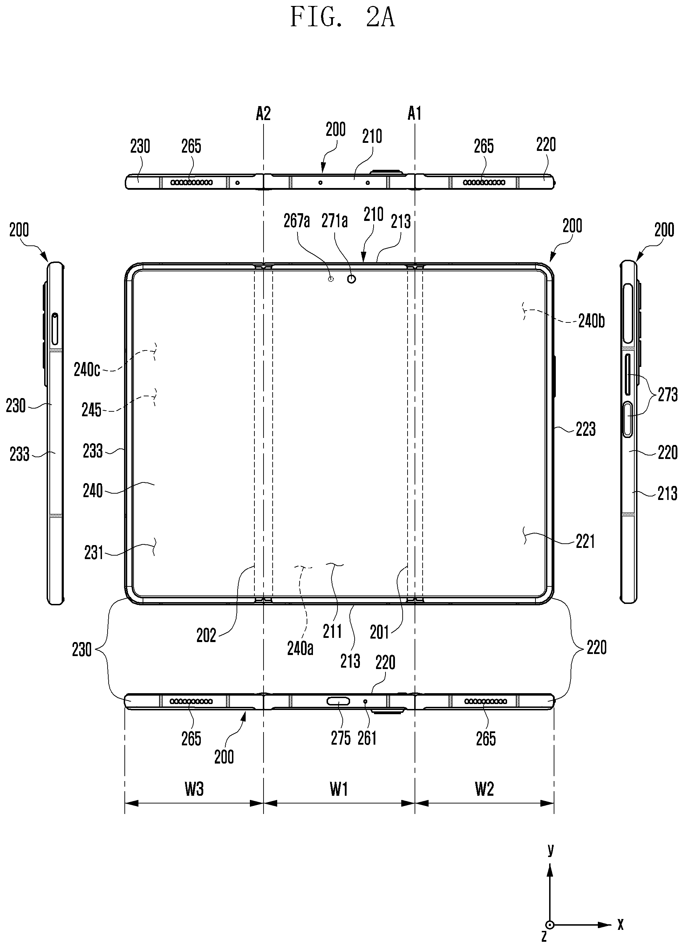

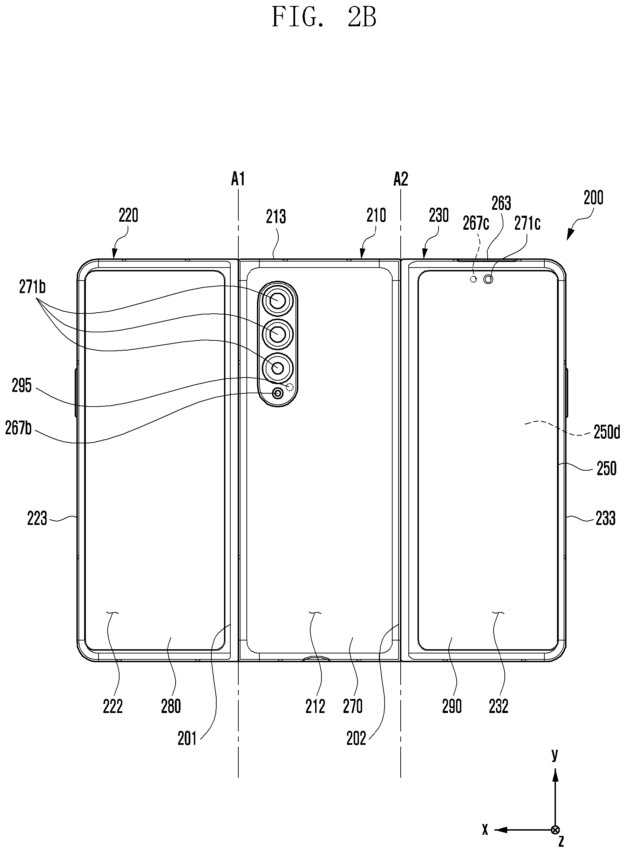

FIG. 2A is a schematic front view illustrating a multi-foldable electronic device according to an embodiment of the disclosure in an unfolded state. FIG. 2B is a schematic rear view illustrating the multi-foldable electronic device according to an embodiment of the disclosure in the unfolded state.

According to various embodiments, embodiments of the electronic device 101 illustrated in FIG. 1 may be included in embodiments of the multi-foldable electronic device 200 illustrated in FIGS. 2A and 2B. For example, the multi-foldable electronic device 200 illustrated in FIGS. 2A and 2B may include the processor 120, the memory 130, the input module 150, the sound output module 155, the display module 160, the audio module 170, the sensor module 176, the interface 177, the connector 178, the haptic module 179, the camera module 180, the antenna module 197, and/or the subscriber identification module 196 illustrated in FIG. 1.

Referring to FIGS. 2A and 2B, the multi-foldable electronic device 200 according to an embodiment of the disclosure may include a first housing 210, a second housing 220, a third housing 230, a first hinge structure 201 (e.g., a first hinge module), a second hinge structure 202 (e.g., a second hinge module), and/or a flexible display 240.

According to an embodiment, the first housing 210 may be disposed between the second housing 220 and the third housing 230. The second housing 220 may be foldably coupled to a first side of the first housing 210 (e.g., in the x-axis direction). A third housing 230 may be foldably coupled to a second side of the first housing 210 (e.g., in the -x-axis direction). For example, the first housing 210 may have the first side (e.g., in the x-axis direction) operationally coupled to at least a portion of the second housing 220 through the first hinge structure 201 and the second side (e.g., in the -x-axis direction) operationally coupled to at least a portion of the third housing 230 through the second hinge structure 202.

According to an embodiment, the second housing 220 may be foldably coupled to the first side (e.g., in the x-axis direction) of the first housing 210. The first hinge structure 201 may be coupled between the first housing 210 and the second housing 220. The first hinge structure 201 may be arranged such that the first housing 210 and the second housing 220 are foldable or unfoldable relative to each other. The first hinge structure 201 may include a hinge device, a hinge member, a hinge plate, a hinge structure, or a hinge assembly. The first housing 210 and the second housing 220 may be rotatably coupled about a first folding axis A1 by using the first hinge structure 201.

According to an embodiment, the third housing 230 may be foldably coupled to the second side of the first housing 210 (e.g., in the -x-axis direction). The second hinge structure 202 may be coupled between the first housing 210 and the third housing 230. The second hinge structure 202 may be arranged such that the first housing 210 and the third housing 230 are foldable or unfoldable relative to each other. The second hinge structure 202 may include a hinge device, a hinge member, a hinge plate, a hinge structure, or a hinge assembly. The first housing 210 and the third housing 230 may be rotatably coupled about a second folding axis A2 by using the second hinge structure 202.

According to an embodiment, in the multi-foldable electronic device 200, the second housing 220 may be folded first relative to the first housing 210 through the first hinge structure 201, and the third housing 230 may be folded thereafter relative to the first housing 210 through the second hinge structure 202. For example, the second housing 220 may be folded relative to the first housing 210 in an in-folding manner through the first hinge structure 201. For example, the second housing 220 may be folded to the first housing 210 while rotating in the z-axis direction and the -x-axis direction through the first hinge structure 201. For example, the third housing 230 may be folded relative to the first housing 210 in an in-folding manner through the second hinge structure 202. For example, the third housing 230 may be folded to the first housing 210 while rotating in the z-axis direction and the x-axis direction through the second hinge structure 202.

According to an embodiment, a width W2 of the second housing 220 in a horizontal direction (e.g., in the x-axis and the -x-axis directions) may be configured to be smaller than a width W1 of the first housing 210 in the horizontal direction (e.g., in the x-axis and the -x-axis directions). The width W1 of the first housing 210 in the horizontal direction (e.g., in the x-axis and the -x-axis directions) may be configured to be substantially the same as the width W3 of the third housing 230 in the horizontal direction (e.g., in the x-axis and the -x-axis directions). According to various embodiments, a width W3 of the third housing 230 in the horizontal direction (e.g., in the x-axis and the -x-axis directions) may be configured to be greater than the width W1 of the first housing 210 in the horizontal direction (e.g., in the x-axis and the -x-axis directions).

According to an embodiment, the first housing 210 and the second housing 220 may be disposed on opposite sides of the first folding axis A1 on which the first hinge structure 201 is disposed and may have an asymmetric shape with respect to the first folding axis A1. According to various embodiments, the first housing 210 and the second housing 220 may have a symmetrical shape with respect to the first folding axis A1. The first housing 210 and the second housing 220 may have different angles or distances from each other depending on whether the multi-foldable electronic device 200 is in an unfolded state, a folded state, or an intermediate state.

According to an embodiment, the first housing 210 and the third housing 230 may be disposed on opposite sides of the second folding axis A2 on which the second hinge structure 202 is disposed and may have a substantially symmetrical shape with respect to the second folding axis A2. According to various embodiments, the first housing 210 and the third housing 230 may have an asymmetrical shape with respect to the second folding axis A2. The first housing 210 and the third housing 230 may have different angles or distances from each other depending on whether the multi-foldable electronic device 200 is in an unfolded state, a closed state, or an intermediate state.

According to an embodiment, a width of the second hinge structure 202 may be configured to be greater than a width of the first hinge structure 201. For example, when the second housing 220 is folded first relative to the first housing 210 and the third housing 230 is folded relative to the first housing 210 such that the third housing 230 is disposed on the second housing 220, the width of the second hinge structure 202 may be configured to be greater than the width of the first hinge structure 201. For example, the first hinge structure 201 may be a first in-folding hinge, a slim hinge, or a small hinge having a smaller width than the second hinge structure 202. For example, the second hinge structure 202 may be a second in-folding hinge, a wide hinge, or a big hinge having a greater width than the first hinge structure 201. In an embodiment, although the width of the second hinge structure 202 is described as being configured to be greater than the width of the first hinge structure 201, the disclosure is not limited thereto, and the width of the first hinge structure 201 may be configured to be greater than the width of the second hinge structure 202 depending on a type and/or an operation of the multi-foldable electronic device 200.

According to an embodiment, the flexible display 240 may be disposed on the first housing 210, the second housing 220, and the third housing 230. For example, the flexible display 240 may be disposed across at least a portion of front surfaces (e.g., in the z-axis direction) of the first housing 210, the second housing 220, and the third housing 230. The flexible display 240 may be a first display, a foldable display, or a main display. According to various embodiments, a sub-display 250 may be disposed on a rear surface (e.g., in the -z-axis direction) of the third housing 230. The sub-display 250 may be a second display or an auxiliary display.

Herein, the surface on which the flexible display 240 is disposed may be defined as the front surface of the multi-foldable electronic device 200 (e.g., in the z-axis direction), and the surface opposite to the front surface may be defined as the rear surface of the multi-foldable electronic device 200 (e.g., in the -z-axis direction). A surface surrounding the space between the front surface (e.g., in the z-axis direction) and the rear surface (e.g., in the -z-axis direction) may be defined as the side surface of the multi-foldable electronic device 200.

According to an embodiment, the flexible display 240 may include a first display area 240a disposed on the first housing 210, a second display area 240b disposed on the second housing 220, and a third display area 240c disposed on the third housing 230 (e.g., the front surface). The first display area 240a, the second display area 240b, and the third display area 240c may be formed integrally to constitute the flexible display 240. According to various embodiments, when the multi-foldable electronic device 200 is in the unfolded state, the flexible display 240 may be configured to be disposed on most of the front surface of the multi-foldable electronic device 200 (e.g., in the z-axis direction). At least a portion of the flexible display 240 may be transformed into a flat or curved surface. The division of the flexible display 240 into the first display area 240a, the second display area 240b, and the third display area 240c may be an exemplary physical division. The flexible display 240 may be fabricated as an overall seamless single screen. According to an embodiment, the sub-display 250 may include a fourth display area 250d. For example, the sub-display 250 may be disposed on the rear surface of the third housing 230 (e.g., in the -z-axis direction).

According to an embodiment, when the multi-foldable electronic device 200 is in the unfolded state, the first housing 210 may include a first surface 211 connected to at least a portion of the first hinge structure 201 and the second hinge structure 202 and disposed to face the front (e.g., in the z-axis direction) of the multi-foldable electronic device 200, a second surface 212 disposed to face away from the first surface 211, and/or a first side surface member 213 surrounding at least a portion of a first space between the first surface 211 and the second surface 212.

According to an embodiment, when the multi-foldable electronic device 200 is in the unfolded state, the second housing 220 may include a third surface 221 connected to at least a portion of the first hinge structure 201 and disposed to face the front (e.g., in the z-axis direction) of the multi-foldable electronic device 200, a fourth surface 222 disposed to face away from the third surface 221, and/or a second side surface member 223 surrounding at least a portion of a second space between the third surface 221 and the fourth surface 222.

According to an embodiment, when the multi-foldable electronic device 200 is in the unfolded state, the third housing 230 may include a fifth surface 231 connected to at least a portion of the second hinge structure 202 and disposed to face the front (e.g., in the z-axis direction) of the multi-foldable electronic device 200, a sixth surface 232 disposed to face away from the fifth surface 231, and/or a third side surface member 233 surrounding at least a portion of the third space between the fifth surface 231 and the sixth surface 232.

According to various embodiments, when the multi-foldable electronic device 200 is in the unfolded state, the first surface 211, the third surface 221, and the fifth surface 231 may face substantially the same direction (e.g., the z-axis direction). When the multi-foldable electronic device 200 is in the unfolded state, the second surface 212, the fourth surface 222, and the sixth surface 232 may face substantially the same direction (e.g., the -z-axis direction).

According to an embodiment, when the first housing 210 and the second housing 220 of the multi-foldable electronic device 200 are in the folded state, the first surface 211 and the third surface 221 may be disposed to face each other. When the third housing 230 is in the folded state relative to the first housing 210 of the multi-foldable electronic device 200, and the third housing 230 is disposed above (e.g., in the z-axis direction of) the second housing 220, the fourth surface 222 of the second housing 220 and the fifth surface 231 of the third housing 230 may be disposed to face each other.

According to various embodiments, the multi-foldable electronic device 200 may include a recess 245 formed to accommodate the flexible display 240 through structural coupling of the first housing 210, the second housing 220, and the third housing 230. The recess 245 may have substantially the same size as the flexible display 240.

According to various embodiments, when the multi-foldable electronic device 200 is in the unfolded state, the first housing 210, the second housing 220, and the third housing 230 may form an angle of about 180 degrees, and the first display area 240a, the second display area 240b, and the third display area 240c of the flexible display 240 may be disposed to face substantially the same direction (e.g., the z-axis direction) while forming substantially the same plane. The fourth display area 250d of the sub-display 250 may be disposed to face a direction opposite to the third display area 240c.

According to various embodiments, the first housing 210 and the second housing 220 may form an angle that allows the first and second housings to be stopped at a predetermined folding angle between the folded state and the unfolded state using the first hinge structure 201 (e.g., free-stop function). In various embodiments, the second housing 220 may be rotated to move toward the second surface 212 (e.g., the rear surface) of the first housing 210 while being biased in an unfolding direction (e.g., the -z-axis direction) based on a predetermined inflection angle by using the first hinge structure 201.

According to various embodiments, the first housing 210 and the third housing 230 may form an angle that allows the first and third housings to be stopped at a predetermined folding angle between the folded state and the unfolded state by using the second hinge structure 202. In various embodiments, the third housing 230 may be rotated to move toward the second surface 212 (e.g., a rear surface) of the first housing 210 while being biased in the unfolding direction (e.g., the -z-axis direction) based on a predetermined inflection angle by using the second hinge structure 202.

According to various embodiments, the flexible display 240 may be disposed to be supported by the first surface 211 of the first housing 210, the first hinge structure 201, the third surface 221 of the second housing 220, the second hinge structure 202, and the fifth surface 231 of the third housing 230. In an embodiment, the sub-display 250 (e.g., the fourth display area 250d) may be disposed such that the sub-display 250 is at least partially visible from the outside through the sixth surface 232 in an inner space of the third housing 230. In various embodiments, the sub-display 250 may be disposed in the internal space of the second housing 220 to be visible from the outside through the fourth surface 222.

According to an embodiment, the flexible display 240 may be mainly used when the multi-foldable electronic device 200 is in the unfolded state, and the sub-display 250 may be mainly used when the multi-foldable electronic device 200 is in the folded state.

According to an embodiment, the multi-foldable electronic device 200 may include a first rear surface cover 270 disposed on the second surface 212 of the first housing 210, a second rear surface cover 280 disposed on the fourth surface 222 of the second housing 220, and/or a third rear surface cover 290 disposed on the sixth surface 232 of the third housing 230. In various embodiments, at least a portion of the first rear surface cover 270 may be integrally formed with a portion of the first side surface member 213. According to various embodiments, at least a portion of the second rear surface cover 280 may be integrated with a portion of the second side surface member 223. According to various embodiments, at least a portion of the third rear surface cover 290 may be integrated with a portion of the third side surface member 233. According to an embodiment, at least one of the first rear surface cover 270, the second rear surface cover 280, and the third rear surface cover 290 may be made of a substantially transparent plate (e.g., a glass plate including various coating layers, or a polymer plate) or an opaque plate.

According to various embodiments, the first rear surface cover 270 may be made of, for example, coated or colored glass, ceramic, polymer, metal (e.g., aluminum, stainless steel (STS), or magnesium), or an opaque plate such as a combination of two or more of these materials. According to various embodiments, the second rear surface cover 280 may be made of, for example, coated or colored glass, ceramic, polymer, metal (e.g., aluminum, stainless steel (STS), or magnesium), or an opaque plate such as a combination of two or more of these materials. According to various embodiments, the third rear surface cover 290 may be made of a substantially transparent plate of, for example, glass or polymer. The sub-display 250 (e.g., the fourth display area 250d) may be disposed to be visible from outside through the third rear surface cover 290 in the inner space of the third housing 230.

According to various embodiments, the multi-foldable electronic device 200 may include at least one of an input module 261, sound output modules 263 and 265, sensor modules 267a, 267b, and 267c, camera modules 271a, 271b, and 271c, key input devices 273, an indicator (not illustrated), or a connector port 275. In various embodiments, at least one of the above-described components may be omitted from the multi-foldable electronic device 200 or at least one other component may be additionally included.

According to an embodiment, the input module 261 may include at least one microphone disposed to detect the direction of sound. The input module 261 may include the input module 150 illustrated in FIG. 1.

According to an embodiment, the sound output modules 263 and 265 may include at least one speaker. The sound output modules 263 and 265 may include a call receiver 263 disposed through the sixth surface 232 of the third housing 210, and a speaker 265 disposed on a portion of an upper portion (e.g., in the y-axis direction) and a portion of a lower portion (e.g., in the -y-axis direction) of the second side surface member 223 of the second housing 220, and/or on a portion of an upper portion (e.g., in the y-axis direction) and a portion of a lower portion (e.g., in the -y-axis direction) of the third side surface member 233 of the third housing 230. The sound output modules 263 and 265 may include the sound output module 155 illustrated in FIG. 1.

According to an embodiment, the input module 261, the sound output modules 263 and 265, and the connector port 275 may be disposed in the space of the first housing 210, the second housing 220, and/or the third housing 230, and may be exposed to the external environment through one or more holes provided in the first housing 210, the second housing 220, and/or the third housing 230. In an embodiment, the holes provided in the first housing 210, the second housing 220, and/or the third housing 230 may be commonly used for the input module 261 and the sound output modules 263 and 265. In an embodiment, the sound output modules 263 and 265 may include a speaker that operates without holes formed in the second housing 220 and/or the third housing 230 (e.g., a piezo speaker).

According to various embodiments, the camera modules 271a, 271b, and 271c may include a first camera module 271a disposed on the first surface 211 of the first housing 210, a second camera module 271b disposed on the second surface 212 of the first housing 210, and/or a third camera module 271c disposed on the sixth surface 232 of the third housing 230. According to an embodiment, the multi-foldable electronic device 200 may include a flash 295 disposed adjacent to the second camera module 271b. The flash 295 may include, for example, a light-emitting diode or a xenon lamp. According to an embodiment, the camera modules 271a, 271b, and 271c may include one or more lenses, an image sensor, and/or an image signal processor. In an embodiment, at least one of the camera modules 271a, 271b, and 271c may include two or more lenses (e.g., wide-angle and telephoto lenses) and image sensors, and the camera modules may be disposed together on one surface of the first housing 210, the second housing 220, and/or the third housing 230. For example, the camera modules 271a, 271b, and 271c may include the camera module 180 illustrated in FIG. 1.

According to an embodiment, the sensor modules 267a, 267b, and 267c may generate electrical signals or data values corresponding to an internal operating state or an external environmental state of the multi-foldable electronic device 200. According to various embodiments, the sensor modules 267a, 267b, and 267c may include a first sensor module 267a disposed on the first surface 211 of the first housing 210, a second sensor module 267b disposed on the second surface 212 of the first housing 210, and/or a third sensor module 267c disposed on the sixth surface 232 of the third housing 230. For example, the sensor modules 267a, 267b, and 267c may include the sensor module 176 illustrated in FIG. 1.

According to various embodiments, the multi-foldable electronic device 200 may further include an unillustrated sensor module, for example, at least one of a 6-axis sensor (e.g., an acceleration sensor and a gyro sensor), an angle detection sensor, a Hall sensor, an angular velocity sensor, a folding and unfolding detection sensor, a proximity sensor, a pressure sensor, a magnetic sensor, a biometric sensor, a temperature sensor, a humidity sensor, a gesture sensor, a grip sensor, a color sensor, an infrared (IR) sensor, an illuminance sensor, an ultrasonic sensor, an iris recognition sensor, a distance detection sensor (e.g., a time of flight (TOF) sensor or a light detection and ranging (LiDAR) sensor), and a fingerprint recognition sensor.

According to an embodiment, key input devices 273 may be disposed to be exposed to the outside through the second side surface member 223 of the second housing 220. In an embodiment, the key input devices 273 may also be disposed to be exposed to the outside through the third side surface member 233 of the third housing 230. In an embodiment, the multi-foldable electronic device 200 may not include some or all of the key input devices 273, and the key input devices 273 not included may be implemented in another form such as soft keys on the flexible display 240 and/or the sub-display 250. In various embodiments, the key input devices 273 may be implemented using a pressure sensor and/or a touch sensor included in the flexible display 240 and/or the sub-display 250. In an embodiment, the key input devices 273 may include a power button and/or a volume control button of the foldable electronic device 200.

According to an embodiment, the connector port 275 may include a connector (e.g., a USB connector or an interface connector port module (IF module)) for transmitting and/or receiving power and/or data with an external electronic device (e.g., the external electronic devices 102, 104, and 108 of FIG. 1). In an embodiment, the connector port 275 may be configured to perform a function for transmitting/receiving an audio signal to and from the external electronic device, or may further include a separate connector port (e.g., an ear jack hole) configured to perform an audio signal transmitting/receiving function. For example, the connector port 275 may be formed in a portion of the first side surface member 213 of the first housing 210. For example, the connector port 275 may include the connector terminal 178 illustrated in FIG. 1.

According to various embodiments, at least one camera module 271a or 271c among the camera modules 271a, 271b, and 271c, at least one sensor module 267a or 267c among the sensor modules 267a, 267b, and 267c, and/or an indicator may be arranged to be exposed through at least one of the displays 240 and 250. For example, at least one camera module 271a or 271c, at least one sensor module 267a or 267c, and/or an indicator may be disposed inside at least one of the housings 210, 220, and 230, under an active area (display area) of at least one of the displays 240 and 250, and may be arranged to be exposed to an external environment through a transparent area or an opening perforated up to a cover member (e.g., a window layer (not illustrated) of the flexible display 240 and/or the third rear surface cover 290).

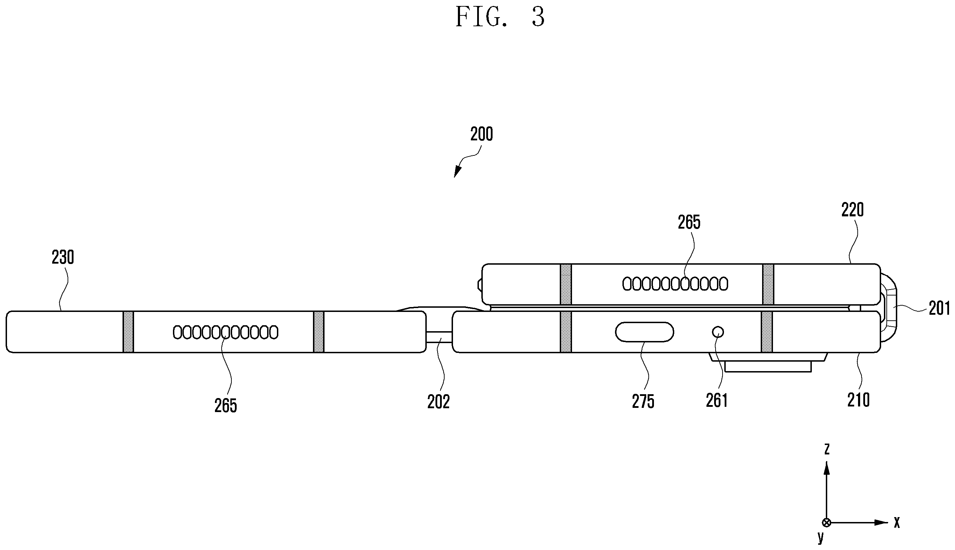

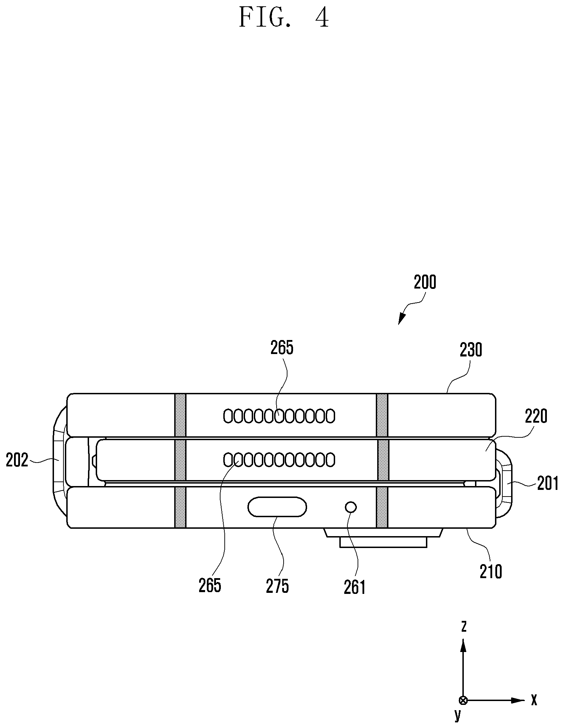

FIG. 3 is a view schematically illustrating a state in which a first housing and a second housing of a multi-foldable electronic device according to an embodiment of the disclosure are folded to each other. FIG. 4 is a view schematically illustrating a state in which the first housing, the second housing, and the third housing of the multi-foldable electronic device according to an embodiment of the disclosure are folded to each other.

According to an embodiment, FIG. 3 may be a view, as seen in the -y-axis direction, of a state in which the second housing 220 of the multi-foldable electronic device 200 is folded toward the first housing 210. According to an embodiment, FIG. 4 may be a view, as seen in the -y-axis direction, of a state in which the second housing 220 of the multi-foldable electronic device 200 is first folded toward the first housing 210 and the third housing 230 is subsequently folded toward the first housing 210 such that the third housing 230 is disposed above (e.g., in the z-axis direction) the second housing 220. For example, the multi-foldable electronic device 200 illustrated in FIGS. 3 and 4 may be folded in a G-type shape. According to various embodiments, the multi-foldable electronic device 200 may be folded into various types of shapes.

Referring to FIGS. 3 and 4, the multi-foldable electronic device 200 may include the first housing 210, the second housing 220, the third housing 230, a first hinge structure 201, and a second hinge structure 202.

According to an embodiment, the second housing 220 may first be folded onto the first housing 210 (e.g., in the z-axis direction) through the first hinge structure 201 (e.g., a first folding hinge).

According to an embodiment, after the second housing 220 is folded relative to the first housing 210 through the first hinge structure 201, the third housing 230 may be folded toward the first housing 210 through the second hinge structure 202 (e.g., a second folding hinge) to be disposed above (e.g., in the z-axis direction) the second housing 220.

According to an embodiment, the first hinge structure 201 may have a first width. The second hinge structure 202 may have a second width. For example, the second width may be greater than the first width. According to various embodiments, since the second housing 220 is folded relative to the first housing 210 and the third housing 230 is folded relative to the first housing 210 so as to be disposed on the upper side (e.g., in the z-axis direction) of the second housing 220, a second width of the second hinge structure 202 may be configured to be greater than a first width of the first hinge structure 201. For example, the first hinge structure 201 may include a first folding hinge, a slim hinge, or a small hinge, which has a smaller width than the second hinge structure 202. For example, the second hinge structure 202 may include a second folding hinge, a wide hinge, or a big hinge, which has a greater width than the first hinge structure 201.

According to various embodiments, the multi-foldable electronic device 200 described below may include at least some of the embodiments described with reference to FIGS. 1 to 4. Embodiments related to the multi-foldable electronic device 200 described below may be integrated into and applied to, for example, the embodiments of the multi-foldable electronic device 200 illustrated in FIGS. 2A to 4. In the description of the multi-foldable electronic device 200 according to various embodiments of the disclosure described below, the same reference numerals are assigned to components that are substantially the same as the embodiments described above with reference to FIGS. 1 to 4, and redundant descriptions of their functions may be omitted.

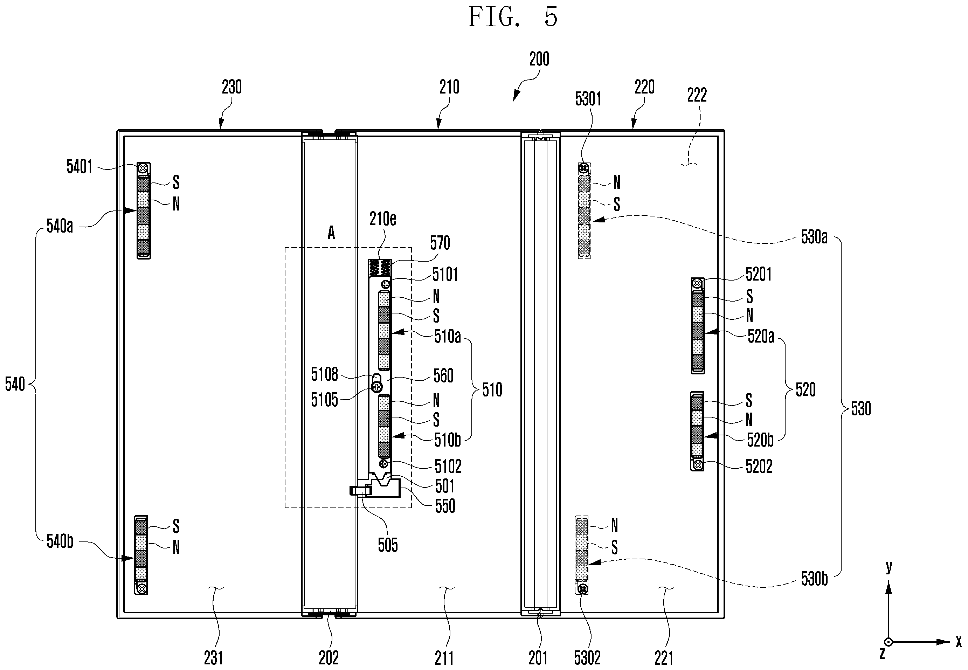

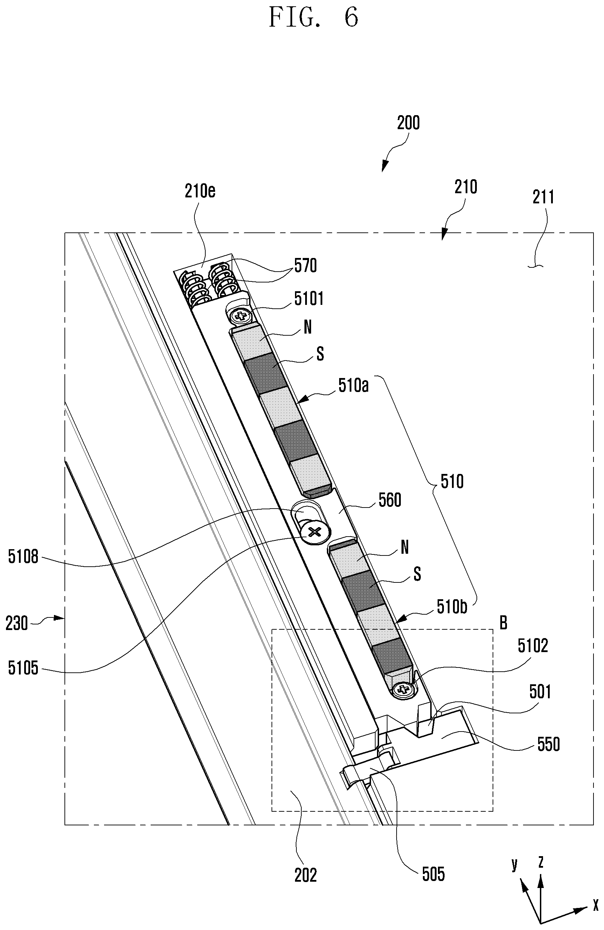

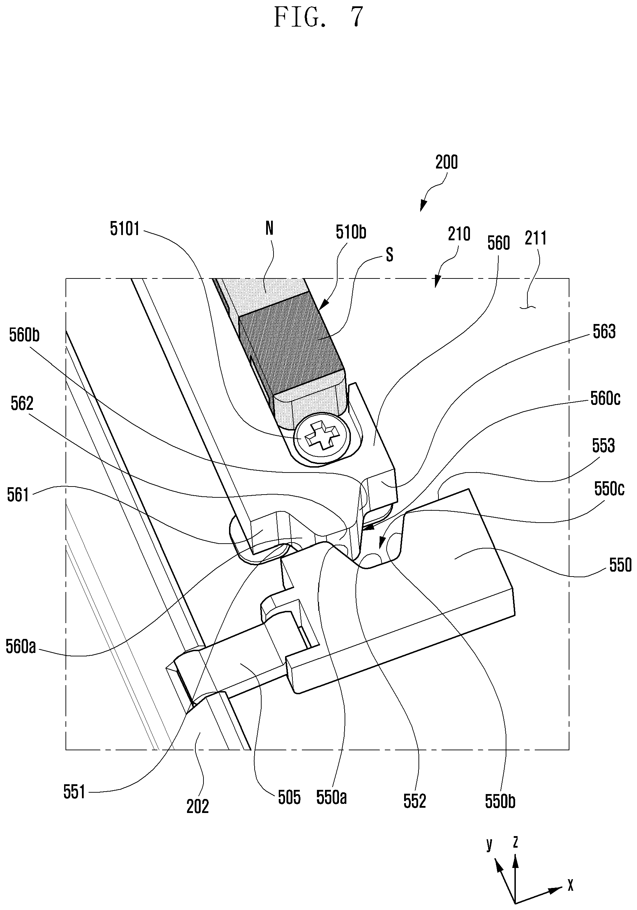

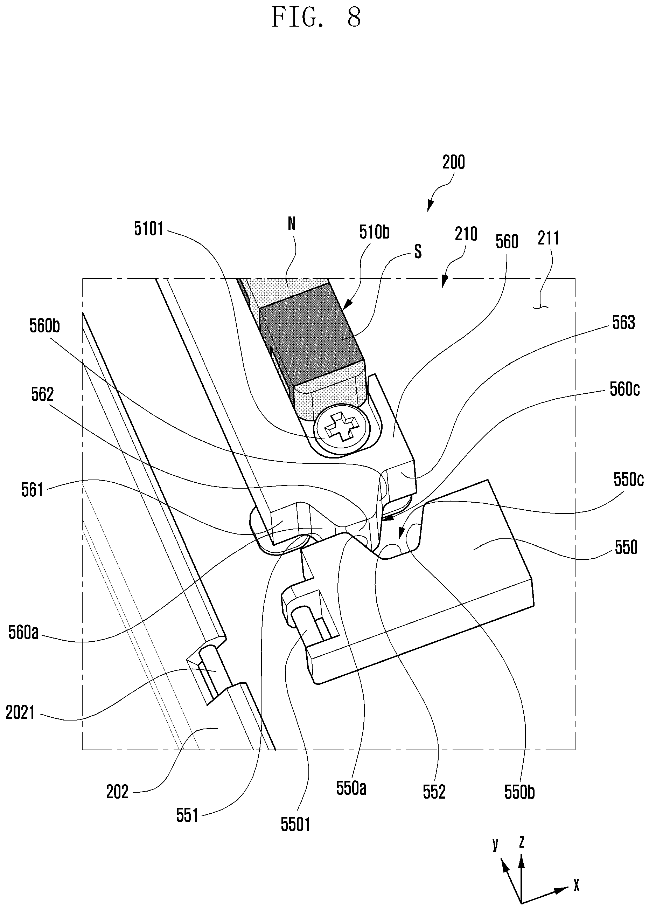

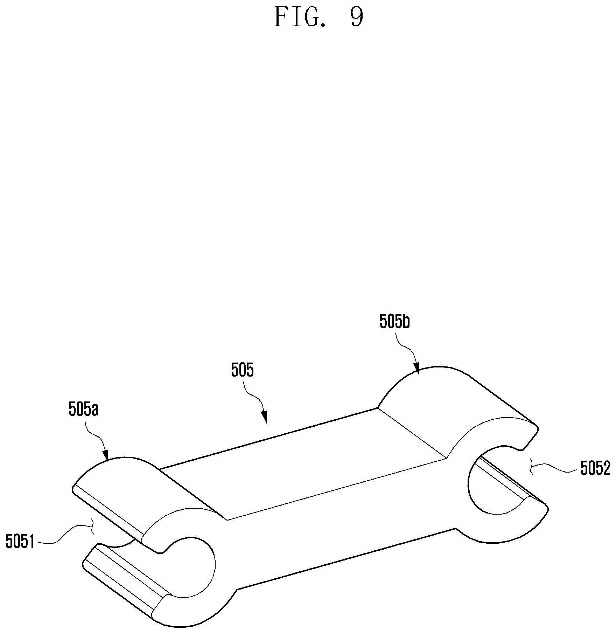

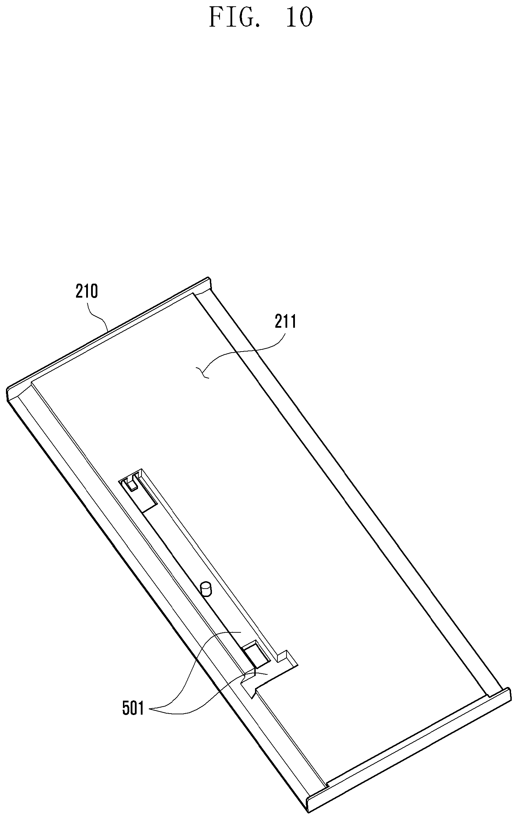

FIG. 5 is a schematic front view illustrating a multi-foldable electronic device including at least one magnet according to an embodiment of the disclosure, in an unfolded state. FIG. 6 is an enlarged view schematically illustrating area A of the multi-foldable electronic device in FIG. 5 according to an embodiment of the disclosure. FIG. 7 is an enlarged view schematically illustrating area B of the multi-foldable electronic device in FIG. 6 according to an embodiment of the disclosure. FIG. 8 is a schematic view illustrating a state in which a link is removed from the multi-foldable electronic device in FIG. 7 according to an embodiment of the disclosure. FIG. 9 is a schematic view illustrating the link included in the multi-foldable electronic device according to an embodiment of the disclosure. FIG. 10 is a schematic view illustrating a groove formed in the first housing of the multi-foldable electronic device according to an embodiment of the disclosure.

According to an embodiment, FIG. 5 may be a schematic front view (e.g., in the z-axis direction) illustrating a state in which the flexible display 240 is omitted from the multi-foldable electronic device 200 illustrated in FIG. 2A, according to an embodiment of the disclosure.

Referring to FIGS. 5 to 10, the multi-foldable electronic device 200 may include a first housing 210, a second housing 220, a third housing 230, a first hinge structure 201, and a second hinge structure 202.

According to an embodiment, the first housing 210 may include a first magnet assembly 510. The first magnet assembly 510 may be disposed on a first surface 211 (e.g., the front surface in the z-axis direction) of the first housing 210. For example, the first magnet assembly 510 may be disposed on the first surface 211 (e.g., the front surface in the z-axis direction) of the first housing 210 in a fourth direction (e.g., the -x-axis direction). The first magnet assembly 510 may include a (1-1)^{th}magnet assembly 510a and/or a (1-2)^{th} magnet assembly 510b. The (1-1)^{th}thmagnet assembly 510a may include at least one magnet in which N poles and S poles are alternately arranged. The (1-2)^{th} magnet assembly 510b may include at least one magnet in which N poles and S poles are alternately arranged. According to an embodiment, the first magnet assembly 510 may be movable to a first position (e.g., in the y-axis direction) and a second position (e.g., in the -y-axis direction) of the first housing 210.

According to an embodiment, the first magnet assembly 510 may be disposed on a bracket 560. For example, the (1-1)^{th}magnet assembly 510a and the (1-2)^{th} magnet assembly 510b of the first magnet assembly 510 may be spaced apart from each other by a predetermined distance and may be disposed on the bracket 560. The bracket 560 may be arranged to be movable to the first position (e.g., in the y-axis direction) and the second position (e.g., in the -y-axis direction) in the first housing 210. For example, the bracket 560 may be movable in a first direction (e.g., the y-axis direction) or a second direction (e.g., the -y-axis direction) on the first surface 211 of the first housing 210. For example, the bracket 560 may be movable to the first position (e.g., the y-axis direction) or the second position (e.g., the -y-axis direction) on the first surface 211 of the first housing 210. The (1-1)^{th} magnet assembly 510a and the (1-2)^{th} magnet assembly 510b may be fixed to the bracket 560. For example, the (1-1)^{th} magnet assembly 510a may be disposed on the bracket 560 in the first direction (e.g., at the first position in the y-axis direction) and may be fixed to the bracket 560 through a (1-1)^{th}screw 5101. For example, the (1-1)^{th} magnet assembly 510a may be disposed on an upper portion (e.g., in the y-axis direction) of the bracket 560. For example, the (1-2)^{th}magnet assembly 510b may be disposed on the bracket 560 in the second direction (e.g., the second position in the -y-axis direction) and may be fixed to the bracket 560 through a (1-2)^{th} screw 5102. For example, the (1-2)^{th} magnet assembly 510b may be disposed on a lower portion (e.g., in the - y-axis direction) of the bracket 560. For example, the first direction of the bracket 560 may be the y-axis direction, and the second direction may be the -y-axis direction, which is opposite to the first direction.

According to an embodiment, the bracket 560 may be disposed in a groove 501 formed on the first surface 211 of the first housing 210, as illustrated in FIG. 10. The groove 501 may be formed adjacent to the second hinge structure 202. The bracket 560 may include a guide hole 5108. The guide hole 5108 may form a space on the first surface 211 of the first housing 210 in which the bracket 560 is movable in the first direction (e.g., the y-axis direction) or the second direction (e.g., the -y-axis direction). The bracket 560 may be disposed in the groove 501 formed on the first surface 211 of the first housing 210 through a screw 5105 inserted into the guide hole 5108. For example, the screw 5105 inserted into the guide hole 5108 may prevent the bracket 560 from being separated outward from the groove 501 formed on the first surface 211 of the first housing 210. The guide hole 5108 may guide the bracket 560, which includes the first magnet assembly 510, to move in the first direction (e.g., the y-axis direction) or the second direction (e.g., the -y-axis direction).

According to an embodiment, the bracket 560 may be a support plate configured to support and/or fix the first magnet assembly 510. The bracket 560 may be an accommodation member configured to accommodate the first magnet assembly 510. The bracket 560 may include a non-conductive material having wear resistance and low friction (e.g., plastic). For example, the bracket 560 may include at least one material selected from polyoxymethylene (POM), polytetrafluoroethylene (PTFE), polyimide (PI), polyetheretherketone (PEEK), polyphenylene sulfide (PPS), nylon, and polyethylene terephthalate (PET).

According to an embodiment, an elastic member 570 (e.g., a spring) may be disposed between a first end (e.g., an upper end in the y-axis direction) of the bracket 560 and a first end 210e (e.g., in the y-axis direction) of the groove 501. The elastic member 570 may include at least one spring. The elastic member 570 may support a force by which the bracket 560 moves in the first direction (e.g., the y-axis direction) or the second direction (e.g., the -y-axis direction). The bracket 560 may smoothly move in the first direction (e.g., the y-axis direction) or the second direction (e.g., the -y-axis direction) through the elastic member 570. The elastic member 570 may be contracted and expanded based on movement of the bracket 560 in the first direction (e.g., the y-axis direction) or the second direction (e.g., the -y-axis direction). For example, the first magnet assembly 510 may be moved and disposed at a first position (e.g., in the y-axis direction) or a second position (e.g., in the -y-axis direction) of the first housing 210 based on movement of the bracket 560 in the first direction (e.g., the y-axis direction) or the second direction (e.g., the -y-axis direction).

According to an embodiment, the bracket 560 including the first magnet assembly 510 may interlock with the second hinge structure 202 through the link 505 and the sliding module 550. For example, the second hinge structure 202 may be operationally connected to the sliding module 550 through the link 505. For example, rotational movement of the second hinge structure 202 may be delivered to the sliding module 550 through the link 505, and the delivered rotational movement may be changed into linear movement (e.g., horizontal reciprocating movement in the -x-axis direction and the x-axis direction) through the sliding module 550. For example, the rotational movement of the second hinge structure 202 may be delivered to the sliding module 550 through the link 505, and the sliding module 550 may be moved in a third direction (e.g., the x-axis direction) and a fourth direction (e.g., the -x-axis direction) through the delivered rotational movement. For example, the sliding module 550 may move the bracket 560 including the first magnet assembly 510 in the first direction (e.g., the y-axis direction) and the second direction (e.g., the -y-axis direction) through lateral linear movement (e.g., horizontal reciprocating movement in the -x-axis direction and the x-axis direction).

According to an embodiment, the bracket 560, at least a portion of the link 505, and the sliding module 550 may be disposed in the groove 501 formed on the first surface 211 of the first housing 210, as illustrated in FIG. 10. For example, at least a portion of the link 505 and the sliding module 550 may be disposed adjacent to a second end (e.g., in the -y-axis direction) opposite to the first end 210e (e.g., in the y-axis direction) of the groove 501. According to an embodiment, the sliding module 550 may interlock with the bracket 560. The sliding module 550 may include a non-conductive material having wear resistance and low friction (e.g., plastic). For example, the sliding module 550 may include at least one material selected from polyoxymethylene (POM), polytetrafluoroethylene (PTFE), polyimide (PI), polyetheretherketone (PEEK), polyphenylene sulfide (PPS), nylon, and polyethylene terephthalate (PET).

According to an embodiment, the second housing 220 may include a second magnet assembly 520. The second magnet assembly 520 may be disposed on a third surface 221 (e.g., the front surface in the z-axis direction) of the second housing 220. For example, the second magnet assembly 520 may be disposed on the third surface 221 (e.g., the front surface in the z-axis direction) of the second housing 220 in a third direction (e.g., the x-axis direction). The second magnet assembly 520 may include a (2-1)^{th} magnet assembly 520a and/or a (2-2)^{th} magnet assembly 520b. The (2-1)^{th}magnet assembly 520a may include at least one magnet in which S poles and N poles are alternately arranged. The (2-2)^{th} magnet assembly 520b may include at least one magnet in which S poles and N poles are alternately arranged. The (2-1)^{th} magnet assembly 520a and the (2-2)^{th}magnet assembly 520b may be disposed to be spaced apart from each other by a predetermined distance. The (2-1)^{th} magnet assembly 520a and the (2-2)^{th} magnet assembly 520b may be fixed to the third surface 221 (e.g., the front surface) of the second housing 220. For example, the (2-1)^{th} magnet assembly 520a may be fixed to the third surface 221 of the second housing 220 in the first direction (e.g., the y-axis direction) through a (2-1)^{th} screw 5201, and the (2-2)^{th} magnet assembly 520b may be fixed to the third surface 221 of the second housing 220 in the second direction (e.g., the -y-axis direction) through a (2-2)^{th}screw 5202. For example, the (2-1)^{th}magnet assembly 520a may be disposed at an upper portion (e.g., in the y-axis direction) of the third surface 221 of the second housing 220, and the (2-2)^{th}magnet assembly 520b may be disposed at a lower portion (e.g., in the -y-axis direction) of the third surface 221 of the second housing 220.

According to an embodiment, when the second housing 220 is folded relative to the first housing 210, the second magnet assembly 520 of the second housing 220 may be disposed to face the first magnet assembly 510 of the first housing 210.

According to an embodiment, the second housing 220 may include a third magnet assembly 530. The third magnet assembly 530 may be disposed on a fourth surface 222 (e.g., the rear surface in the -z-axis direction) of the second housing 220. For example, the third magnet assembly 530 may be disposed on the fourth surface 222 (e.g., the rear surface in the - z-axis direction) of the second housing 220 in a fourth direction (e.g., the -x-axis direction). The third magnet assembly 530 may include a (3-1)^{th} magnet assembly 530a and/or a (3-2)^{th} magnet assembly 530b. The (3-1)^{th}magnet assembly 530a may include at least one magnet in which N poles and S poles are alternately arranged. The (3-2)^{th} magnet assembly 530b may include at least one magnet in which N poles and S poles are alternately arranged. The (3-1)^{th} magnet assembly 530a and the (3-2)^{th} magnet assembly 530b may be disposed to be spaced apart from each other by a predetermined distance. The (3-1)^{th} magnet assembly 530a and the (3-2)^{th} magnet assembly 530b may be fixed to the fourth surface 222 (e.g., the rear surface) of the second housing 220. For example, the (3-1)^{th} magnet assembly 530a may be fixed to the fourth surface 222 of the second housing 220 in the first direction (e.g., the y-axis direction) through a (3-1)^{th} screw 5301, and the (3-2)^{th}magnet assembly 530b may be fixed to the fourth surface 222 of the second housing 220 in the second direction (e.g., the -y-axis direction) through a (3-2)^{th} screw 5302. For example, the (3-1)^{th} magnet assembly 530a may be disposed at an upper portion (e.g., in the y-axis direction) of the fourth surface 222 of the second housing 220, and the (3-2)^{th}magnet assembly 530b may be disposed at a lower portion (e.g., in the -y-axis direction) of the fourth surface 222 of the second housing 220.

According to an embodiment, when the first housing 210, the second housing 220, and the third housing 230 are folded to each other, the third magnet assembly 530 disposed on the fourth surface 222 of the second housing 220 may be disposed to face a fourth magnet assembly 540 disposed on a fifth surface 231 of the third housing 230.

According to an embodiment, the third housing 230 may include the fourth magnet assembly 540. The fourth magnet assembly 540 may be disposed on the fifth surface 231 (e.g., the front surface in the z-axis direction) of the third housing 230. For example, the fourth magnet assembly 540 may be disposed on the fifth surface 231 (e.g., the front surface in the z-axis direction) of the third housing 230 in a fourth direction (e.g., the -x-axis direction). The fourth magnet assembly 540 may include a (4-1)^{th} magnet assembly 540a and/or a (4-2)^{th} magnet assembly 540b. The (4-1)^{th}magnet assembly 540a may include at least one magnet in which S poles and N poles are alternately arranged. The (4-2)^{th}magnet assembly 540b may include at least one magnet in which S poles and N poles are alternately arranged. The (4-1)^{th} magnet assembly 540a and the (4-2)^{th} magnet assembly 540b may be disposed to be spaced apart from each other by a predetermined distance. The (4-1)^{th} magnet assembly 540a and the (4-2)^{th} magnet assembly 540b may be fixed to the fifth surface 231 (e.g., the front surface) of the third housing 230. For example, the (4-1)^{th} magnet assembly 540a may be fixed to the fifth surface 231 of the third housing 230 in the first direction (e.g., the y-axis direction) through a (4-1)^{th}screw 5401, and the (4-2)^{th} magnet assembly 540b may be fixed to the fifth surface 231 of the third housing 230 in the second direction (e.g., the -y-axis direction) through a (4-2)^{th} screw 5402. For example, the (4-1)^{th}magnet assembly 540a may be disposed at an upper portion (e.g., in the y-axis direction) of the fifth surface 231 of the third housing 230, and the (4-2)^{th}magnet assembly 540b may be disposed at a lower portion (e.g., in the -y-axis direction) of the fifth surface 231 of the third housing 230.

According to an embodiment, when the first housing 210, the second housing 220, and the third housing 230 are folded to each other, the fourth magnet assembly 540 disposed on the fifth surface 231 of the third housing 230 may be disposed to face the third magnet assembly 530 disposed on the fourth surface 222 of the second housing 220.

Referring to FIGS. 7 to 9, a portion of the second hinge structure 202 may be connected to the sliding module 550 through the link 505. The sliding module 550 may be operationally connected to the second hinge structure 202 through the link 505 and may perform horizontal movement (e.g., linear reciprocating movement) in the third direction (e.g., the x-axis direction) and the fourth direction (e.g., the -x-axis direction) in response to rotation of the second hinge structure 202. For example, as the sliding module 550 performs horizontal movement (e.g., linear reciprocating movement) in the third direction (e.g., the x-axis direction) and the fourth direction (e.g., the -x-axis direction), the bracket 560 may be moved and disposed in the first direction (e.g., the y-axis direction) and the second direction (e.g., the -y-axis direction).

According to an embodiment, the link 505 may include a first portion 505a and a second portion 505b, as illustrated in FIG. 9. The first portion 505a may include a first opening 5051. The second portion 505b may include a second opening 5052. The first portion 505a of the link 505 may be connected to a portion of the second hinge structure 202. The second portion 505b of the link 505 may be connected to a portion of the sliding module 550. For example, the first portion 505a of the link 505 may be coupled to a first shaft 2021 disposed in the second hinge structure 202 through the first opening 5051. For example, the first shaft 2021 disposed in the second hinge structure 202 may be coupled by being forcibly fitted into the first opening 5051 formed in the first portion 505a of the link 505. For example, the second portion 505b of the link 505 may be coupled to a second shaft 5501 disposed in the sliding module 550 through the second opening 5052. For example, the second shaft 5501 disposed in the sliding module 550 may be coupled by being forcibly fitted into the second opening 5052 formed in the second portion 505b of the link 505.

According to an embodiment, the sliding module 550 may include a concave portion 550c (e.g., a first cam or a first inclined cam) having at least one flat surface and at least one inclined surface at an end in the y-axis direction, as illustrated in FIG. 7. For example, the concave portion 550c of the sliding module 550 may include a (1-1)^{th} flat surface 551, a (1-1)^{th} inclined surface 550a, a (1-2)^{th} flat surface 552, a (1-2)^{th} inclined surface 550b, and/or a (1-3)^{th} flat surface 553. For example, a curved surface may be formed between the (1-1)^{th} flat surface 551 and the (1-1)^{th}inclined surface 550a. For example, a curved surface may be formed between the (1-2)^{th} flat surface 552 and the (1-2)^{th} inclined surface 550b. For example, a curved surface may be formed between the (1-2)^{th}inclined surface 550b and the (1-3)^{th} flat surface 553.

According to an embodiment, the bracket 560 may include a convex portion 560c (e.g., a second cam or a second inclined cam) having at least one flat surface and at least one inclined surface at the second end (e.g., in the -y-axis direction) opposite to the first end (e.g., the upper end in the y-axis direction). For example, the convex portion 560c of the bracket 560 may include a (2-1)^{th}flat surface 561, a (2-1)^{th}inclined surface 560a, a (2-2)^{th} flat surface 562, a (2-2)^{th} inclined surface 560b, and/or a (3-3)^{th} flat surface 563. For example, a curved surface may be formed between the (2-1)^{th} flat surface 561 and the (2-1)^{th}inclined surface 560a. For example, a curved surface may be formed between the (2-1)^{th} inclined surface 560a and the (2-2)^{th} flat surface 562. For example, a curved surface may be formed between the (2-2)^{th} inclined surface 560b and the (3-3)^{th} flat surface 563.

According to an embodiment, the concave portion 550c of the sliding module 550 and the convex portion 560c of the bracket 560 may be formed at positions corresponding to each other. For example, when the sliding module 550 moves in a predetermined direction and the bracket 560 moves in the second direction (e.g., the -y-axis direction), the convex portion 560c of the bracket 560 may be disposed in the concave portion 550c of the sliding module 550. When the convex portion 560c of the bracket 560 is positioned in the concave portion 550c of the sliding module 550, the (2-1)^{th} flat surface 561, the (2-1)^{th} inclined surface 560a, the (2-2)^{th} flat surface 562, the (2-2)^{th} inclined surface 560b, and the (3-3)^{th} flat surface 563 forming the convex portion 560c of the bracket 560 may be disposed respectively at positions corresponding to the (1-1)^{th} flat surface 551, the (1-1)^{th} inclined surface 550a, the (1-2)^{th}flat surface 552, the (1-2)^{th} inclined surface 550b, and the (1-3)^{th}flat surface 553 forming the concave portion 550c of the sliding module 550.

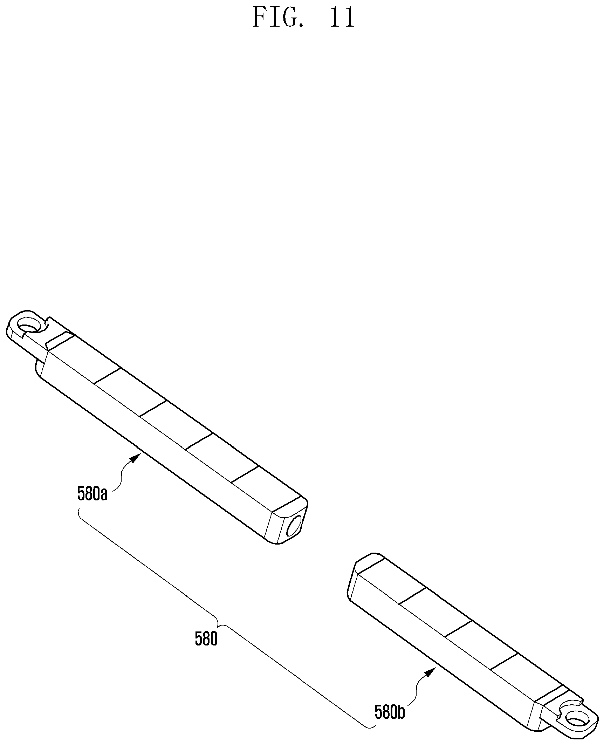

FIG. 11 is a view schematically illustrating a molded member applied to at least one magnet assembly of a multi-foldable electronic device according to an embodiment of the disclosure.

According to an embodiment, the multi-foldable electronic device 200 may include a molded member 580. The molded member 580 may include a non-conductive material (e.g., plastic). For example, the molded member 580 may include a first molded member 580a and/or a second molded member 580b.

According to an embodiment, the molded member 580 may be configured to surround at least one magnet. For example, the molded member 580 may surround the first magnet assembly 510 disposed in the first housing 210. For example, the molded member 580 may surround the second magnet assembly 520 or the third magnet assembly 530 disposed in the second housing 220. For example, the molded member 580 may surround the fourth magnet assembly 540 disposed in the third housing.

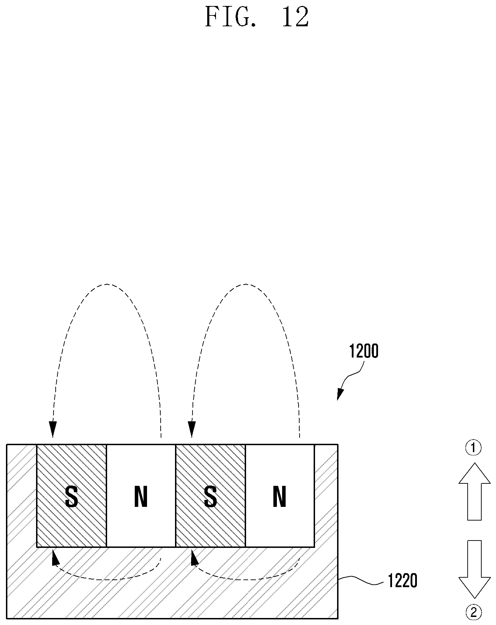

FIG. 12 is a view schematically illustrating a shielded magnet applied to at least one magnet of a multi-foldable electronic device according to an embodiment of the disclosure.

According to an embodiment, the multi-foldable electronic device 200 may include a shielded magnet 1200. The shielded magnet 1200 may be configured in a form in which at least one magnet assembly (e.g., an S pole and an N pole) is surrounded by a shielding member 1220. The shielded magnet 1200 may amplify magnetic force in an area where magnetic force is required (e.g., direction ①) and may shield magnetic force through the shielding member 1220 in a region where magnetic force is unnecessary (e.g., second direction ②). For example, the shielding member 1220 may be disposed to correspond to an area in which an electronic component sensitive to magnetic force (e.g., a printed circuit board) is disposed.

According to various embodiments, the shielded magnet 1200 may be applied to the first magnet assembly 510, the second magnet assembly 520, the third magnet assembly 530, and/or the fourth magnet assembly 540 described for the above-described multi-foldable electronic device 200. According to various embodiments, the first magnet assembly 510 disposed in the first housing 210, the second magnet assembly 520 and the third magnet assembly 530 disposed in the second housing 220, and/or the fourth magnet assembly 540 disposed in the third housing may be replaced with, for example, the shielded magnet 1200 illustrated in FIG. 12.

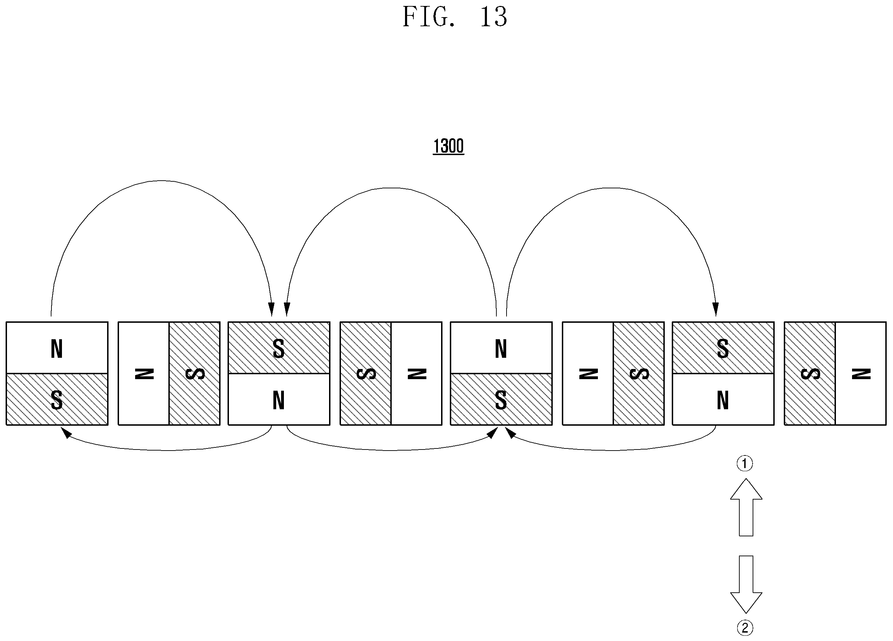

FIG. 13 is a view schematically illustrating a Halbach magnet applied to at least one magnet of a multi-foldable electronic device according to an embodiment of the disclosure.

According to an embodiment, the multi-foldable electronic device 200 may include a Halbach magnet 1300. The Halbach magnet 1300 may include at least one S pole and at least one N pole that may be alternately arranged and/or arranged in a misaligned manner. For example, the Halbach magnet 1300 may include at least one S pole and at least one N pole arranged in various forms and may provide various strengths of magnetic force. For example, the Halbach magnet 1300 may increase magnetic force in one direction (e.g., direction ①) according to an arrangement state of at least one S pole and at least one N pole.

According to various embodiments, the Halbach magnet 1300 may be applied to the first magnet assembly 510, the second magnet assembly 520, the third magnet assembly 530, and/or the fourth magnet assembly 540 described for the above-described multi-foldable electronic device 200. According to various embodiments, the first magnet assembly 510 disposed in the first housing 210, the second magnet assembly 520 and the third magnet assembly 530 disposed in the second housing 220, and/or the fourth magnet assembly 540 disposed in the third housing may be replaced with, for example, the Halbach magnet 1300 illustrated in FIG. 13.

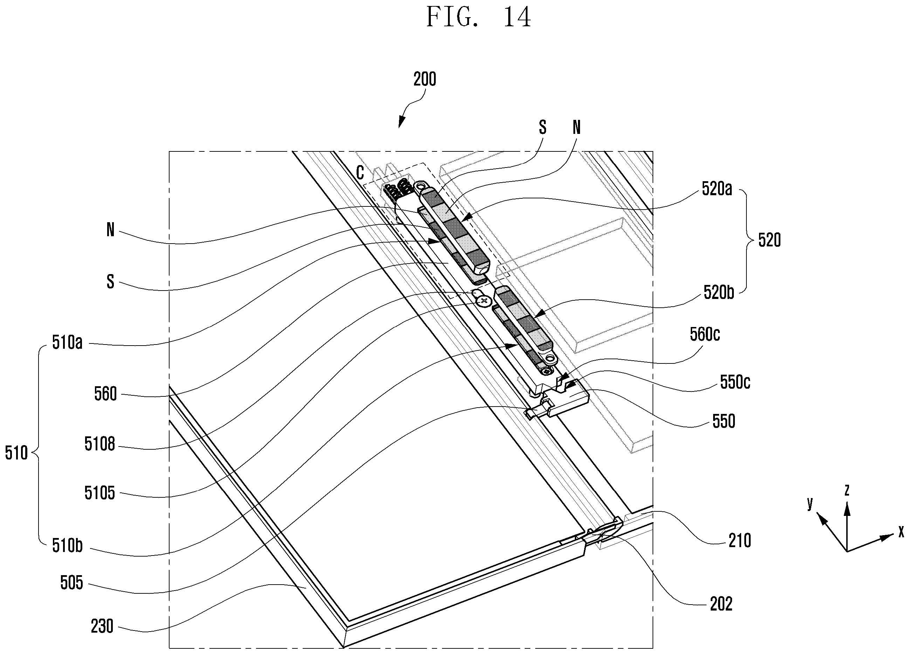

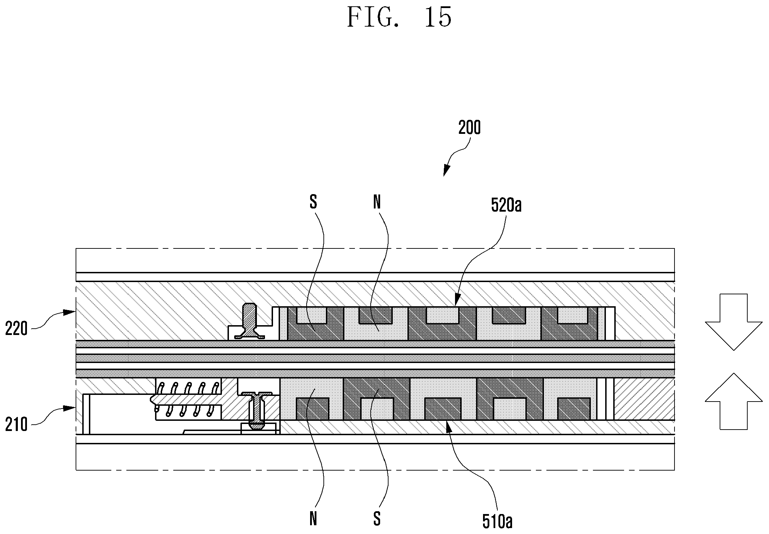

FIG. 14 is a view schematically illustrating how a first magnet assembly is disposed when the first housing and the third housing are unfolded to form a first angle (e.g., a first predetermined angle) therebetween in a multi-foldable electronic device according to an embodiment of the disclosure. FIG. 15 is a view schematically illustrating portion C of the multi-foldable electronic device in FIG. 14 according to an embodiment of the disclosure.

Referring to FIG. 14, the multi-foldable electronic device 200 may be in the state in which the first housing 210 and the third housing 230 are unfolded to form the first angle (e.g., about 180°) therebetween, and the first housing 210 and the second housing 220 are folded to each other.

According to an embodiment, when the first housing 210 and the third housing 230 are unfolded to form the first angle (e.g., about 180°) therebetween, the bracket 560 including the first magnet assembly 510 may be disposed in the first direction (e.g., the y-axis direction). For example, when the angle between the first housing 210 and the third housing 230 is the first angle (e.g., about 180°, the first predetermined angle), the first magnet assembly 510 may be disposed at the first position (e.g., in the y-axis direction) on the first housing 210.

According to an embodiment, when the third housing 230 is unfolded to form the first angle (e.g., about 180°) relative to the first housing 210 in a state in which the first housing 210 is disposed on a floor surface, for example, on a table, the second hinge structure 202 may rotate. When the second hinge structure 202 rotates, the link 505 and the sliding module 550 may move in a third direction (e.g., the x-axis direction). For example, when the second hinge structure 202 rotates in the z-axis direction and the -x-axis direction such that the third housing 230 is unfolded to form the first angle (e.g., about 180°) relative to the first housing 210, the link 505 and the sliding module 550 may move in the third direction (e.g., the x-axis direction). For example, when the sliding module 550 moves in the third direction (e.g., the x-axis direction), the bracket 560 may move in the first direction (e.g., the y-axis direction). For example, the (2-1)^{th} inclined surface 560a of the bracket 560 may slide along the (1-1)^{th} inclined surface 550a of the sliding module 550. For example, when the sliding module 550 moves in the third direction (e.g., the x-axis direction) and the bracket 560 is disposed in the first direction (e.g., the y-axis direction), the concave portion 550c (e.g., the first cam) of the sliding module 550 and the convex portion 560c (e.g., the second cam) of the bracket 560 may be arranged in a misaligned manner. For example, when the concave portion 550c (e.g., the first cam) of the sliding module 550 and the convex portion 560c (e.g., the second cam) of the bracket 560 are arranged in a misaligned manner, at least a portion of the (1-1)^{th} flat surface 551 of the concave portion 550c and the (2-2)^{th}flat surface 562 of the convex portion 560c may be disposed to face each other.

According to an embodiment, when the first housing 210 and the third housing 230 are unfolded to form the first angle (e.g., about 180°) therebetween, and the bracket 560 including the first magnet assembly 510 is disposed in the first direction (e.g., the y-axis direction), the first magnet assembly 510 and the second magnet assembly 520 may be arranged to have substantially opposite polarities. For example, when the bracket 560 including the first magnet assembly 510 is disposed in the first direction (e.g., the y-axis direction), the N poles and the S poles of the first magnet assembly 510 may be disposed to face the S poles and the N poles of the second magnet assembly 520.

Referring to FIGS. 14 and 15, in the state in which the first housing 210 and the third housing 230 are unfolded to form the first angle (e.g., about 180°) therebetween and the first housing 210 and the second housing 220 are folded to each other, when the bracket 560 including the first magnet assembly 510 is disposed in the first direction (e.g., the y-axis direction), the first magnet assembly 510 and the second magnet assembly 520 may be arranged to have substantially opposite polarities, and an attractive force may act between the first magnet assembly 510 and the second magnet assembly 520.

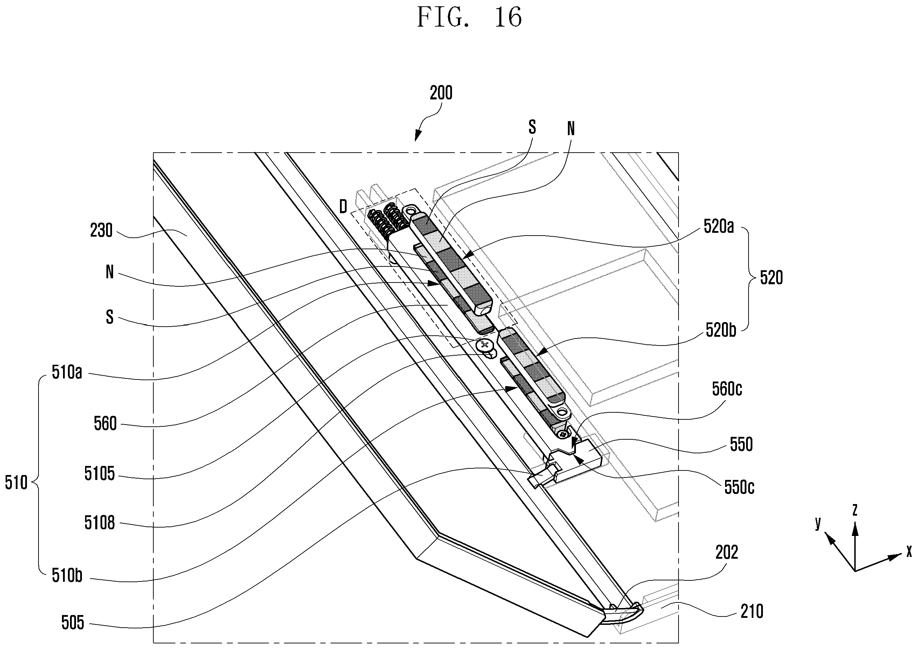

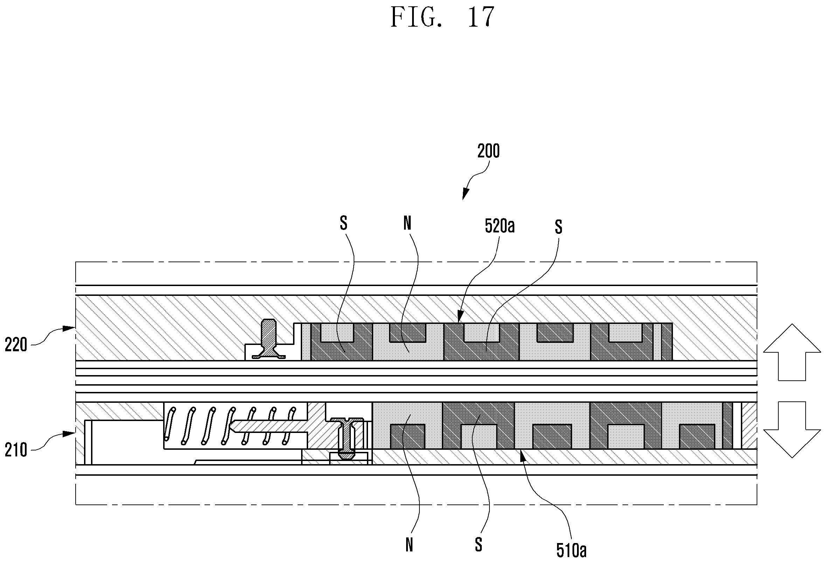

FIG. 16 is a view schematically illustrating how the first magnet assembly is disposed when the first housing and the third housing are folded to form a second angle (e.g., a second predetermined angle) therebetween in the multi-foldable electronic device according to an embodiment of the disclosure. FIG. 17 is a view schematically illustrating portion D of the multi-foldable electronic device in FIG. 16 according to an embodiment of the disclosure.

Referring to FIG. 16, the multi-foldable electronic device 200 may be in the state in which the third housing 230 is folded to form a second angle (e.g., about 110° to 170°) relative to the first housing 210 and the first housing 210 and the second housing 220 are folded in the state in which the first housing 210 and the third housing 230 are unfolded to form the first angle (e.g., about 180°) therebetween, as illustrated in FIG. 14.

According to an embodiment, when the third housing 230 is folded to form the second angle (e.g., about 110° to 170°) relative to the first housing 210, the bracket 560 including the first magnet assembly 510 may move in the second direction (e.g., the -y-axis direction). For example, when the angle between the first housing 210 and the third housing 230 is the second angle (e.g., about 110° to 170° (the second predetermined angle)), the first magnet assembly 510 may be disposed at the second position (e.g., in the -y-axis direction) on the first housing 210.

According to an embodiment, when the third housing 230 is folded to form the second angle (e.g., about 110° to 170°) relative to the first housing 210 in a state in which the first housing 210 is disposed on a floor surface, for example, on a table, the second hinge structure 202 may rotate. When the second hinge structure 202 rotates, the link 505 and the sliding module 550 may move in the fourth direction (e.g., the -x-axis direction). For example, when the second hinge structure 202 rotates in the z-axis direction and the x-axis direction such that the third housing 230 is folded to form the second angle (e.g., about 110° to 170°) relative to the first housing 210, the link 505 and the sliding module 550 may move in the fourth direction (e.g., the -x-axis direction). For example, when the sliding module 550 moves in the fourth direction (e.g., the -x-axis direction), the bracket 560 may move in the second direction (e.g., the -y-axis direction). For example, the (2-1)^{th} inclined surface 560a of the bracket 560 may slide along the (1-1)^{th} inclined surface 550a of the sliding module 550. For example, when the sliding module 550 moves in the fourth direction (e.g., the -x-axis direction) and the bracket 560 is disposed in the second direction (e.g., the -y-axis direction), the concave portion 550c (e.g., the first cam) of the sliding module 550 and the convex portion 560c (e.g., the second cam) of the bracket 560 may be disposed to engage each other. For example, when the concave portion 550c (e.g., the first cam) of the sliding module 550 and the convex portion 560c (e.g., the second cam) of the bracket 560 are disposed to engage each other, the (1-1)^{th} flat surface 551, the (1-1)^{th} inclined surface 550a, the (1-2)^{th} flat surface 552, the (1-2)^{th} inclined surface 550b, and the (1-3)^{th}flat surface 553 of the concave portion 550c may be disposed to face the (2-1)^{th} flat surface 561, the (2-1)^{th} inclined surface 560a, the (2-2)^{th} flat surface 562, the (2-2)^{th} inclined surface 560b, and the (3-3)^{th} flat surface 563 of the convex portion 560c, respectively.

According to an embodiment, when the first housing 210 and the third housing 230 are folded to form the second angle (e.g., about 110° to 170°) therebetween and the bracket 560 including the first magnet assembly 510 is moved and disposed in the second direction (e.g., the -y-axis direction), the first magnet assembly 510 and the second magnet assembly 520 may be arranged to have substantially the same polarity. For example, when the bracket 560 including the first magnet assembly 510 is disposed in the second direction (e.g., the -y-axis direction), the N poles and the S poles of the first magnet assembly 510 may be disposed to face the N poles and the S poles of the second magnet assembly 520.

Referring to FIGS. 16 and 17, in the state in which the first housing 210 and the third housing 230 are folded to form the second angle (e.g., about 110° to 170°) therebetween and the first housing 210 and the second housing 220 are folded to each other, when the bracket 560 including the first magnet assembly 510 is disposed in the second direction (e.g., the -y-axis direction), the first magnet assembly 510 and the second magnet assembly 520 may be arranged to have substantially the same polarity, and a repulsive force may act between the first magnet assembly 510 and the second magnet assembly 520. For example, in the state in which the first housing 210 and the second housing 220 are folded to each other, when a repulsive force acts between the first magnet assembly 510 and the second magnet assembly 520, the second housing 220 may be easily unfolded from the first housing 210.

(a) of FIG. 18 is a view schematically illustrating the multi-foldable electronic device according to an embodiment of the disclosure when the second housing is folded relative to the first housing and the third housing is unfolded to form the first angle (e.g., the first predetermined angle) relative to the first housing. (b) of FIG. 18 is a view schematically illustrating portion E of the multi-foldable electronic device in (a) of FIG. 18 according to an embodiment of the disclosure. (c) FIG. 18 is a view schematically illustrating a state in which the bracket is disposed in the first direction when the first housing and the third housing are unfolded to form the first angle therebetween in the multi-foldable electronic device in (a) of FIG. 18 according to an embodiment of the disclosure.

Referring to (a) to (c) of FIG. 18, the multi-foldable electronic device 200 may be in the state in which the first housing 210 and the third housing 230 are unfolded to form the first angle (e.g., about 180°) therebetween, and the first housing 210 and the second housing 220 are folded to each other.

According to an embodiment, when the first housing 210 and the third housing 230 are unfolded to form the first angle (e.g., about 180°) therebetween and the first housing 210 and the second housing 220 are folded to each other, the bracket 560 including the first magnet assembly 510 may be disposed in the first direction (e.g., the y-axis direction). For example, when the angle between the first housing 210 and the third housing 230 is the first angle (e.g., about 180°, the first predetermined angle), the first magnet assembly 510 may be disposed at the first position (e.g., in the y-axis direction) of the first housing 210.

According to an embodiment, when the third housing 230 is unfolded to form the first angle (e.g., about 180°) relative to the first housing 210 in a state in which the first housing 210 is disposed on a floor space, for example, on a table, the second hinge structure 202 may rotate in the z-axis direction and the -x-axis direction. When the second hinge structure 202 rotates, the link 505 and the sliding module 550 may move in a third direction (e.g., the x-axis direction). When the sliding module 550 moves in the third direction (e.g., the x-axis direction), the bracket 560 may move in the first direction (e.g., the y-axis direction). For example, the (2-1)^{th} inclined surface 560a of the bracket 560 may slide along the (1-1)^{th} inclined surface 550a of the sliding module 550. For example, when the sliding module 550 moves in the third direction (e.g., the x-axis direction) and the bracket 560 is disposed in the first direction (e.g., the y-axis direction), the concave portion 550c (e.g., the first cam) of the sliding module 550 and the convex portion 560c (e.g., the second cam) of the bracket 560 may be arranged in a misaligned manner. For example, when the concave portion 550c (e.g., the first cam) of the sliding module 550 and the convex portion 560c (e.g., the second cam) of the bracket 560 are arranged in a misaligned manner, at least a portion of the (1-1)^{th} flat surface 551 of the concave portion 550c and the (2-2)^{th}flat surface 562 of the convex portion 560c may be disposed to face each other.

According to an embodiment, when the first housing 210 and the third housing 230 are unfolded to form the first angle (e.g., about 180°) therebetween, and the bracket 560 including the first magnet assembly 510 is disposed in the first direction (e.g., the y-axis direction), the first magnet assembly 510 and the second magnet assembly 520 may be arranged to have substantially opposite polarities. For example, when the bracket 560 including the first magnet assembly 510 is disposed in the first direction (e.g., the y-axis direction), the N poles and the S poles of the first magnet assembly 510 may be disposed to face the S poles and the N poles of the second magnet assembly 520. For example, when the first magnet assembly 510 and the second magnet assembly 520 are arranged to have substantially opposite polarities, an attractive force may act between the first magnet assembly 510 and the second magnet assembly 520.

(a) of FIG. 19 is a view schematically illustrating the multi-foldable electronic device according to an embodiment of the disclosure when the second housing is folded relative to the first housing and the third housing is folded to form the second angle (e.g., the second predetermined angle) relative to the first housing. (b) of FIG. 19 is a view schematically illustrating portion F of the multi-foldable electronic device illustrated in (a) of FIG. 19, according to an embodiment of the disclosure. (c) of FIG. 19 is a view schematically illustrating a state in which the bracket is disposed in the second direction when the first housing and the third housing are folded to form the second angle therebetween in the multi-foldable electronic device illustrated in (a) of FIG. 19 according to an embodiment of the disclosure.

Referring to (a) to (c) of FIG. 19, the multi-foldable electronic device 200 may be in the state in which the first housing 210 and the third housing 230 are folded to form the second angle (e.g., about 110° to 170°) therebetween, and the first housing 210 and the second housing 220 are folded to each other.

According to an embodiment, when the first housing 210 and the third housing 230 are folded to form the second angle (e.g., about 110° to 170°) therebetween and the first housing 210 and the second housing 220 are folded to each other, the bracket 560 including the first magnet assembly 510 may be disposed in the second direction (e.g., the -y-axis direction). For example, when the angle between the first housing 210 and the third housing 230 is the second angle (e.g., about 110° to 170° (the second predetermined angle)), the first magnet assembly 510 may be disposed at the second position (e.g., in the -y-axis direction) on the first housing 210.

According to an embodiment, when the third housing 230 is folded to form the second angle (e.g., about 110° to 170°) relative to the first housing 210 in the state in which the first housing 210 is disposed on a floor space, for example, on a table, the second hinge structure 202 may rotate in the z-axis direction and the x-axis direction. When the second hinge structure 202 rotates, the link 505 and the sliding module 550 may move in the fourth direction (e.g., the -x-axis direction). When the sliding module 550 moves in the fourth direction (e.g., the -x-axis direction), the bracket 560 may move in the second direction (e.g., the -y-axis direction). For example, the (2-1)^{th} inclined surface 560a of the bracket 560 may slide along the (1-1)^{th} inclined surface 550a of the sliding module 550. For example, when the sliding module 550 moves in the fourth direction (e.g., the -x-axis direction) and the bracket 560 is disposed in the second direction (e.g., the -y-axis direction), the concave portion 550c (e.g., the first cam) of the sliding module 550 and the convex portion 560c (e.g., the second cam) of the bracket 560 may be disposed to engage each other. For example, when the concave portion 550c (e.g., the first cam) of the sliding module 550 and the convex portion 560c (e.g., the second cam) of the bracket 560 are disposed to engage each other, the (1-1)^{th}flat surface 551, the (1-1)^{th}inclined surface 550a, the (1-2)^{th} flat surface 552, the (1-2)^{th} inclined surface 550b, and the (1-3)^{th} flat surface 553 of the concave portion 550c may be disposed to face the (2-1)^{th} flat surface 561, the (2-1)^{th} inclined surface 560a, the (2-2)^{th} flat surface 562, the (2-2)^{th} inclined surface 560b, and the (3-3)^{th}flat surface 563 of the convex portion 560c, respectively.

According to an embodiment, when the first housing 210 and the third housing 230 are folded to form the second angle (e.g., about 110° to 170°) therebetween and the bracket 560 including the first magnet assembly 510 is disposed in the second direction (e.g., the -y-axis direction), the first magnet assembly 510 and the second magnet assembly 520 may be arranged to have substantially the same polarity. For example, when the bracket 560 including the first magnet assembly 510 is disposed in the second direction (e.g., the -y-axis direction), the N poles and the S poles of the first magnet assembly 510 may be disposed to face the N poles and the S poles of the second magnet assembly 520. For example, when the first magnet assembly 510 and the second magnet assembly 520 are arranged to have substantially the same polarity, a repulsive force may act between the first magnet assembly 510 and the second magnet assembly 520.
(a) of FIG. 20 is a view schematically illustrating the multi-foldable electronic device according to an embodiment of the disclosure when the second housing is folded relative to the first housing and the third housing is folded to form a third angle (e.g., a third predetermined angle) relative to the first housing. (b) of FIG. 20 is a view schematically illustrating portion G of the multi-foldable electronic device illustrated in (a) of FIG. 20 according to an embodiment of the disclosure. (c) of FIG. 20 is a view schematically illustrating a state in which the bracket is disposed in the first direction when the first housing and the third housing are folded to form the third angle therebetween in the multi-foldable electronic device in (a) of FIG. 20 according to an embodiment of the disclosure.

Referring to (a) to (c) of FIG. 20, the multi-foldable electronic device 200 may be in the state in which the first housing 210 and the third housing 230 are folded to form the third angle (e.g., about 90°) therebetween, and the first housing 210 and the second housing 220 are folded to each other.

According to an embodiment, when the first housing 210 and the third housing 230 are folded to form the third angle (e.g., about 90°) therebetween and the first housing 210 and the second housing 220 are folded to each other, the bracket 560 including the first magnet assembly 510 may be disposed in the first direction (e.g., the y-axis direction). For example, when the angle between the first housing 210 and the third housing 230 is the third angle (e.g., about 90°, the third predetermined angle), the first magnet assembly 510 may be disposed at the first position (e.g., in the y-axis direction) of the first housing 210.

According to an embodiment, when the third housing 230 is unfolded to form the third angle (e.g., about 180°) relative to the first housing 210 in a state in which the first housing 210 is disposed on a floor space, for example, on a table, the second hinge structure 202 may rotate in the z-axis direction. When the second hinge structure 202 rotates, the link 505 and the sliding module 550 may move in the fourth direction (e.g., the -x-axis direction). When the sliding module 550 moves in the fourth direction (e.g., the -x-axis direction), the bracket 560 may move in the first direction (e.g., the y-axis direction). For example, the (2-2)^{th} inclined surface 560b of the bracket 560 may slide along the (1-2)^{th}inclined surface 550b of the sliding module 550. For example, when the sliding module 550 moves in the fourth direction (e.g., the -x-axis direction) and the bracket 560 is disposed in the first direction (e.g., the y-axis direction), the concave portion 550c (e.g., the first cam) of the sliding module 550 and the convex portion 560c (e.g., the second cam) of the bracket 560 may be arranged in a misaligned manner. For example, when the concave portion 550c (e.g., the first cam) of the sliding module 550 and the convex portion 560c (e.g., the second cam) of the bracket 560 are arranged in a misaligned manner, at least a portion of the (1-3)^{th} flat surface 553 of the concave portion 550c and the (2-2)^{th}flat surface 562 of the convex portion 560c may be disposed to face each other.

According to an embodiment, when the first housing 210 and the third housing 230 are folded to form the third angle (e.g., about 90°) therebetween, and the bracket 560 including the first magnet assembly 510 is disposed in the first direction (e.g., the y-axis direction), the first magnet assembly 510 and the second magnet assembly 520 may be arranged to have substantially opposite polarities. For example, when the bracket 560 including the first magnet assembly 510 is disposed in the first direction (e.g., the y-axis direction), the N poles and the S poles of the first magnet assembly 510 may be disposed to face the S poles and the N poles of the second magnet assembly 520. For example, when the first magnet assembly 510 and the second magnet assembly 520 are arranged to have substantially opposite polarities, an attractive force may act between the first magnet assembly 510 and the second magnet assembly 520.
(a) of FIG. 21 is a view schematically illustrating a case in which the second housing is folded relative to the first housing and the third housing is folded to form the fourth angle (e.g., the fourth predetermined angle) relative to the first housing of the multi-foldable electronic device according to an embodiment of the disclosure. (b) of FIG. 21 is a view schematically illustrating portion H of the multi-foldable electronic device illustrated in (a) of FIG. 21, according to an embodiment of the disclosure. (c) of FIG. 21 is a view schematically illustrating a state in which the bracket is disposed in the first direction when the first housing and the third housing are folded to form the fourth angle therebetween in the multi-foldable electronic device illustrated in (a) of FIG. 21 according to an embodiment of the disclosure.

Referring to (a) to (c) of FIG. 21, the multi-foldable electronic device 200 may be in the state in which the first housing 210 and the second housing 220 are folded to each other, and the third housing 230 is folded to form the fourth angle (e.g., about 0°) relative to the first housing 210.

According to an embodiment, when the first housing 210 and the third housing 230 are folded to form the fourth angle (e.g., about 0° to 90°) therebetween in the state in which the first housing 210 and the second housing 220 are first folded to each other, the bracket 560 including the first magnet assembly 510 may be disposed in the first direction (e.g., the y-axis direction). For example, when the angle between the first housing 210 and the third housing 230 is the fourth angle (e.g., about 0° to 90° (the fourth predetermined angle)), the first magnet assembly 510 may be disposed at the first position (e.g., in the y-axis direction) on the first housing 210.

According to an embodiment, when the third housing 230 is folded to form the fourth angle (e.g., about 0° to 90°) relative to the first housing 210 in the state in which the first housing 210 is disposed on a floor space, for example, on a table, the second hinge structure 202 may rotate in the z-axis direction and the x-axis direction. When the second hinge structure 202 rotates, the link 505 and the sliding module 550 may move in the fourth direction (e.g., the -x-axis direction). When the sliding module 550 moves in the fourth direction (e.g., the -x-axis direction), the bracket 560 may move in the first direction (e.g., the y-axis direction). For example, the (2-2)^{th} inclined surface 560b of the bracket 560 may slide along the (1-2)^{th} inclined surface 550b of the sliding module 550. For example, when the sliding module 550 moves in the fourth direction (e.g., the -x-axis direction) and the bracket 560 is disposed in the first direction (e.g., the y-axis direction), the concave portion 550c (e.g., the first cam) of the sliding module 550 and the convex portion 560c (e.g., the second cam) of the bracket 560 may be arranged in a misaligned manner. For example, when the concave portion 550c (e.g., the first cam) of the sliding module 550 and the convex portion 560c (e.g., the second cam) of the bracket 560 are arranged in a misaligned manner, the (1-3)^{th} flat surface 553 of the concave portion 550c and the (2-2)^{th} flat surface 562 of the convex portion 560c may be disposed to face each other.

According to an embodiment, when the first housing 210 and the third housing 230 are folded to form the fourth angle (e.g., about 0° to 90°) therebetween, and the bracket 560 including the first magnet assembly 510 is disposed in the first direction (e.g., the y-axis direction), the first magnet assembly 510 and the second magnet assembly 520 may be arranged to have substantially opposite polarities. For example, when the bracket 560 including the first magnet assembly 510 is disposed in the first direction (e.g., the y-axis direction), the N poles and the S poles of the first magnet assembly 510 may be disposed to face the S poles and the N poles of the second magnet assembly 520. For example, when the first magnet assembly 510 and the second magnet assembly 520 are arranged to have substantially opposite polarities, an attractive force may act between the first magnet assembly 510 and the second magnet assembly 520.

FIG. 22A is a view schematically illustrating an operation of an elastic member and a bracket in a state in which the third housing is folded to form about 90° relative to the first housing of the multi-foldable electronic device according to an embodiment of the disclosure.

Referring to FIG. 22A, the multi-foldable electronic device 200 may be in the state in which the first housing 210 and the third housing 230 are folded to form about 90° (e.g., the third angle or the third predetermined angle), and the first housing 210 and the second housing 220 are folded to each other.

According to an embodiment, when the first housing 210 and the third housing 230 are folded to form about 90° therebetween through the second hinge structure 202, the bracket 560 including the first magnet assembly 510 may be disposed in the first direction (e.g., the y-axis direction).

According to an embodiment, when the third housing 230 is folded to form about 90° relative to the first housing 210, the link 505 and the sliding module 550 may be disposed in the fourth direction (e.g., the -x-axis direction). When the sliding module 550 is disposed in the fourth direction (e.g., the -x-axis direction), the bracket 560 may be disposed in the first direction (e.g., the y-axis direction). When the bracket 560 is disposed in the first direction (e.g., the y-axis direction), at least a portion of the (2-2)^{th} flat surface 562 of the convex portion 560c of the bracket 560 may be disposed on the (1-3)^{th}flat surface 553 of the concave portion 550c of the sliding module 550.

According to an embodiment, when the first housing 210 and the third housing 230 are folded to form about 90° therebetween and the bracket 560 including the first magnet assembly 510 is disposed in the first direction (e.g., the y-axis direction), the spring 570 may be contracted, and the N poles and the S poles of the first magnet assembly 510 may be disposed to face the S poles and the N poles of the second magnet assembly 520. For example, when the first magnet assembly 510 and the second magnet assembly 520 are arranged to have opposite polarities, an attractive force may act between the first magnet assembly 510 and the second magnet assembly 520.

FIG. 22B is a view schematically illustrating an operation of the elastic member and the bracket in a state in which the third housing is unfolded to form about 110° relative to the first housing in the multi-foldable electronic device according to an embodiment of the disclosure.

Referring to FIG. 22B, the multi-foldable electronic device 200 may be in the state in which the first housing 210 and the third housing 230 are unfolded to form about 110° (e.g., within the second angle range), and the first housing 210 and the second housing 220 are folded to each other.

According to an embodiment, when the first housing 210 and the third housing 230 are unfolded to form about 110° therebetween through the second hinge structure 202, a portion of the bracket 560 including the first magnet assembly 510 may overlap a portion of the sliding module 550.

According to an embodiment, when the third housing 230 is unfolded to form about 110° relative to the first housing 210, the link 505 and the sliding module 550 may move in the third direction (e.g., the x-axis direction). When the sliding module 550 partially moves in the third direction (e.g., the x-axis direction), a portion of the (1-2)^{th} inclined surface 550b of the concave portion 550c of the sliding module 550 and a portion of the (2-2)^{th}inclined surface 560b of the convex portion 560c of the bracket 560 may be disposed to overlap each other.

According to an embodiment, when the first housing 210 and the third housing 230 are unfolded to form about 110° therebetween and a portion of the (1-2)^{th}inclined surface 550b of the concave portion 550c and a portion of the (2-2)^{th} inclined surface 560b of the bracket 560 are disposed to overlap each other, the spring 570 may be partially expanded, and some of the N poles of the first magnet assembly 510 and some of the S poles and some of the N poles of the second magnet assembly 520 may be disposed to face each other. For example, because a portion of an attractive force and a portion of a repulsive force act between the first magnet assembly 510 and the second magnet assembly 520, a user may easily unfold the second housing 220 from the first housing 210.

FIG. 22C is a view schematically illustrating an operation of the elastic member and the bracket in a state in which the third housing is unfolded to form about 135° relative to the first housing of the multi-foldable electronic device according to an embodiment of the disclosure.

Referring to FIG. 22C, the multi-foldable electronic device 200 may be in the state in which the first housing 210 and the third housing 230 are unfolded to form about 135° (e.g., within the second angle range), and the first housing 210 and the second housing 220 are folded to each other.

According to an embodiment, when the first housing 210 and the third housing 230 are unfolded to form about 135° therebetween through the second hinge structure 202, the bracket 560 including the first magnet assembly 510 may be disposed in the second direction (e.g., the -y-axis direction).

According to an embodiment, when the third housing 230 is unfolded to about 135° relative to the first housing 210, the link 505 and the sliding module 550 may move in the third direction (e.g., the x-axis direction). When the sliding module 550 moves in the third direction (e.g., the x-axis direction), the concave portion 550c of the sliding module 550 and the convex portion 560c of the bracket 560 may be arranged to engage with each other.

According to an embodiment, when the concave portion 550c of the sliding module 550 and the convex portion 560c of the bracket 560 are arranged to engage with each other, the (1-1)^{th} flat surface 551, the (1-1)^{th} inclined surface 550a, the (1-2)^{th}flat surface 552, the (1-2)^{th} inclined surface 550b, and the (1-3)^{th} flat surface 553 of the concave portion 550c may overlap the (2-1)^{th} flat surface 561, the (2-1)^{th}inclined surface 560a, the (2-2)^{th} flat surface 562, the (2-2)^{th} inclined surface 560b, and the (3-3)^{th} flat surface 563 of the convex portion 560c. When the concave portion 550c of the sliding module 550 and the convex portion 560c of the bracket 560 are arranged to engage with each other, the spring 570 may be expanded, and the N poles and the S poles of the first magnet assembly 510 may be arranged to face the N poles and the S poles of the second magnet assembly 520. For example, because a repulsive force acts between the first magnet assembly 510 and the second magnet assembly 520, a user may easily unfold the second housing 220 from the first housing 210.

FIG. 22D is a view schematically illustrating an operation of the elastic member and the bracket in a state in which the third housing is unfolded to form about 160° relative to the first housing in the multi-foldable electronic device according to an embodiment of the disclosure.

Referring to FIG. 22D, the multi-foldable electronic device 200 may be in the state in which the first housing 210 and the third housing 230 are unfolded to form about 160° (e.g., within the second angle range), and the first housing 210 and the second housing 220 are folded to each other.

According to an embodiment, when the first housing 210 and the third housing 230 are unfolded to form about 160° therebetween through the second hinge structure 202, the bracket 560 including the first magnet assembly 510 may be disposed substantially between the first direction (e.g., the y-axis direction) and the second direction (e.g., the -y-axis direction).

According to an embodiment, when the third housing 230 is unfolded to form about 160° relative to the first housing 210, the link 505 and the sliding module 550 may partially move in the third direction (e.g., the x-axis direction). When the sliding module 550 partially moves in the third direction (e.g., the x-axis direction), a portion of the (1-1)^{th}inclined surface 550a of the concave portion 550c of the sliding module 550 and a portion of the (2-1)^{th}inclined surface 560a of the convex portion 560c of the bracket 560 may be disposed to overlap each other.

According to an embodiment, when the first housing 210 and the third housing 230 are unfolded to form about 160° and a portion of the (1-1)^{th} inclined surface 550a of the concave portion 550c and a portion of the (2-1)^{th}inclined surface 560a of the bracket 560 are disposed to overlap each other, the spring 570 may be partially contracted, and some of the N poles of the first magnet assembly 510 and some of the S poles and some of the N poles of the second magnet assembly 520 may be disposed to face each other. For example, because a portion of an attractive force and a portion of a repulsive force act between the first magnet assembly 510 and the second magnet assembly 520, a user may easily unfold the second housing 220 from the first housing 210.

FIG. 22E is a view schematically illustrating an operation of the elastic member and the bracket in a state in which the third housing is unfolded to form about 180° relative to the first housing in the multi-foldable electronic device according to an embodiment of the disclosure.

Referring to FIG. 22E, the multi-foldable electronic device 200 may be in the state in which the first housing 210 and the third housing 230 are unfolded to form about 180° (e.g., the first angle or the first predetermined angle) therebetween, and the first housing 210 and the second housing 220 are folded to each other.

According to an embodiment, when the first housing 210 and the third housing 230 are unfolded to form about 180° therebetween through the second hinge structure 202, the bracket 560 including the first magnet assembly 510 may be disposed in the first direction (e.g., the y-axis direction).

According to an embodiment, when the third housing 230 is unfolded to form about 180° relative to the first housing 210, the link 505 and the sliding module 550 may be disposed in the third direction (e.g., the x-axis direction). When the sliding module 550 is disposed in the third direction (e.g., the x-axis direction), the bracket 560 may be disposed in the first direction (e.g., the y-axis direction). When the bracket 560 is disposed in the first direction (e.g., the y-axis direction), at least a portion of the (2-2)^{th} flat surface 562 of the convex portion 560c of the bracket 560 may be disposed on the (1-1)^{th} flat surface 551 of the concave portion 550c of the sliding module 550.

According to an embodiment, when the first housing 210 and the third housing 230 are unfolded to form about 180° therebetween and the bracket 560 including the first magnet assembly 510 is disposed in the first direction (e.g., the y-axis direction), the spring 570 may be contracted, and the N poles and the S poles of the first magnet assembly 510 may be disposed to face the S poles and the N poles of the second magnet assembly 520. For example, when the first magnet assembly 510 and the second magnet assembly 520 are arranged to have opposite polarities, an attractive force may act between the first magnet assembly 510 and the second magnet assembly 520.

Referring to FIGS. 22A to 22E, when the first housing 210 and the third housing 230 of the multi-foldable electronic device 200 are unfolded to form the first angle (e.g., about 180°) therebetween or folded to form the third angle (e.g., about 90°) therebetween, an attractive force may act between the first magnet assembly 510 disposed on the first housing 210 and the second magnet assembly 520 disposed on the second housing 220, and when the first housing 210 and the third housing 230 are folded to form the third angle (e.g., about 110° to 170°) therebetween, at least a portion of a repulsive force may act between the first magnet assembly 510 disposed on the first housing 210 and the second magnet assembly 520 disposed on the second housing 220. For example, when the first housing 210 and the third housing 230 are folded to form the third angle (e.g., about 110° to 170°) therebetween, a user may easily unfold the second housing 220 from the first housing 210 due to at least a portion of the repulsive force acting between the first magnet assembly 510 disposed on the first housing 210 and the second magnet assembly 520 disposed on the second housing 220.

FIG. 23A is a view schematically illustrating an operation of a sliding module according to various embodiments in a state in which a third housing is folded to form about 90° relative to a first housing in a multi-foldable electronic device according to various embodiments of the disclosure.

According to various embodiments, the multi-foldable electronic device 200 described below may include at least some of the embodiments described with reference to FIGS. 1 to 22E. Embodiments related to the multi-foldable electronic device 200 described below may, for example, be integrated into and applied to the embodiments of the multi-foldable electronic device 200 illustrated in FIGS. 2A to 22E. In the description of the multi-foldable electronic device 200 according to various embodiments of the disclosure described below, the same reference numerals are assigned to components that are substantially the same as the embodiments described above with reference to FIGS. 1 to 22E, and redundant descriptions of their functions may be omitted.

According to various embodiments, a sliding module 2550 (e.g., the sliding module 550 of FIG. 5) illustrated in FIGS. 23A to 23E may include a convex portion 2550c. For example, the convex portion 2550c of the sliding module 2550 illustrated in FIGS. 23A to 23E may include a (1-1)^{th} flat surface 2551, a (1-2)^{th} inclined surface 2550a, a (1-2)^{th}flat surface 2552, a (1-2)^{th} inclined surface 2550b, and/or a (1-3)^{th} flat surface 2553.

Referring to FIG. 23A, the multi-foldable electronic device 200 may be in the state in which the first housing 210 and the third housing 230 are folded to form about 90° (e.g., the third angle or the third predetermined angle) therebetween, and the first housing 210 and the second housing 220 are folded to each other.

According to an embodiment, when the first housing 210 and the third housing 230 are folded to form about 90° therebetween through the second hinge structure 202, the bracket 560 including the first magnet assembly 510 may be disposed in the second direction (e.g., the -y-axis direction).

According to an embodiment, when the third housing 230 is folded to form about 90° relative to the first housing 210, the link 505 and the sliding module 2550 may be disposed in the fourth direction (e.g., the -x-axis direction). When the sliding module 2550 is disposed in the fourth direction (e.g., the -x-axis direction), the bracket 560 may be disposed in the second direction (e.g., the -y-axis direction). When the bracket 560 is disposed in the second direction (e.g., the -y-axis direction), the (1-2)^{th} flat surface 2552, the (1-2)^{th} inclined surface 2550b, and the (1-3)^{th} flat surface 2553 of the convex portion 2550c of the sliding module 2550 may overlap a (1-1)^{th}flat surface 561, a (1-2)^{th} inclined surface 560a, and a (1-2)^{th} flat surface 562 of the convex portion 560c of the bracket 560.

According to an embodiment, when the first housing 210 and the third housing 230 are folded to form about 90° therebetween and the bracket 560 including the first magnet assembly 510 is disposed in the second direction (e.g., the -y-axis direction), the spring 570 may be expanded, and the N poles and the S poles of the first magnet assembly 510 may be disposed to face the S poles and the N poles of the second magnet assembly 520. For example, when the first magnet assembly 510 and the second magnet assembly 520 are arranged to have opposite polarities, an attractive force may act between the first magnet assembly 510 and the second magnet assembly 520.

FIG. 23B is a view schematically illustrating an operation of the sliding module according to various embodiments in a state in which the third housing is unfolded to form about 110° relative to the first housing in the multi-foldable electronic device according to various embodiments of the disclosure.

Referring to FIG. 23B, the multi-foldable electronic device 200 may be in the state in which the first housing 210 and the third housing 230 are unfolded to form about 110° (e.g., within the second angle range) therebetween, and the first housing 210 and the second housing 220 are folded to each other.

According to an embodiment, when the first housing 210 and the third housing 230 are unfolded to form about 110° therebetween through the second hinge structure 202, the bracket 560 including the first magnet assembly 510 may substantially overlap a portion of the sliding module 2550.

According to an embodiment, when the third housing 230 is unfolded to form about 110° relative to the first housing 210, the link 505 and the sliding module 2550 may move in the third direction (e.g., the x-axis direction). When the sliding module 2550 partially moves in the third direction (e.g., the x-axis direction), a portion of the (1-2)^{th} inclined surface 2550b of the convex portion 2550c of the sliding module 2550 and a portion of the (2-1)^{th} inclined surface 560a of the convex portion 560c of the bracket 560 may be disposed to overlap each other.

According to an embodiment, when the first housing 210 and the third housing 230 are unfolded to form about 110° therebetween and a portion of the (1-2)^{th}inclined surface 2550b of the convex portion 2550c of the sliding module 2550 and a portion of the (2-1)^{th} inclined surface 560a of the bracket 560 are disposed to overlap each other, the spring 570 may be partially contracted, and some of the N poles of the first magnet assembly 510 and some of the S poles and some of the N poles of the second magnet assembly 520 may be disposed to face each other. For example, because a portion of an attractive force and a portion of a repulsive force act between the first magnet assembly 510 and the second magnet assembly 520, a user may easily unfold the second housing 220 from the first housing 210.

FIG. 23C is a view schematically illustrating an operation of the sliding module according to various embodiments in a state in which the third housing is unfolded to form about 135° relative to the first housing of the multi-foldable electronic device according to various embodiments of the disclosure.

Referring to FIG. 23C, the multi-foldable electronic device 200 may be in the state in which the first housing 210 and the third housing 230 are unfolded to form about 135° (e.g., within the second angle range) therebetween, and the first housing 210 and the second housing 220 are folded to each other.

According to an embodiment, when the first housing 210 and the third housing 230 are unfolded to form about 135° therebetween through the second hinge structure 202, the bracket 560 including the first magnet assembly 510 may be disposed in the first direction (e.g., the y-axis direction).

According to an embodiment, when the third housing 230 is unfolded to form about 135° relative to the first housing 210, the link 505 and the sliding module 2550 may move in the third direction (e.g., the x-axis direction). When the sliding module 2550 moves in the third direction (e.g., the x-axis direction), the convex portion 560c of the bracket 560 may be disposed on the convex portion 2550c of the sliding module 2550.

According to an embodiment, when the convex portion 560c of the bracket 560 is disposed on the convex portion 2550c of the sliding module 2550, the (2-2)^{th}flat surface 562 of the convex portion 560c of the bracket 560 may be disposed on the (1-2)^{th}flat surface 2552 of the convex portion 2550c of the sliding module 2550. For example, the spring 570 may be contracted, and the N poles and the S poles of the first magnet assembly 510 may be disposed to face the N poles and the S poles of the second magnet assembly 520. For example, because a repulsive force acts between the first magnet assembly 510 and the second magnet assembly 520, a user may easily unfold the second housing 220 from the first housing 210.

FIG. 23D is a view schematically illustrating an operation of the sliding module according to various embodiments in a state in which the third housing is unfolded to form about 160° relative to the first housing of the multi-foldable electronic device according to various embodiments of the disclosure.

Referring to FIG. 23D, the multi-foldable electronic device 200 may be in the state in which the first housing 210 and the third housing 230 are unfolded to form about 160° (e.g., within the second angle range) therebetween, and the first housing 210 and the second housing 220 are folded to each other.

According to an embodiment, when the first housing 210 and the third housing 230 are unfolded to form about 160° therebetween through the second hinge structure 202, the bracket 560 including the first magnet assembly 510 may substantially overlap a portion of the sliding module 2550.

According to an embodiment, when the third housing 230 is unfolded to form about 160° relative to the first housing 210, the link 505 and the sliding module 2550 may partially move in the third direction (e.g., the x-axis direction). When the sliding module 2550 partially moves in the third direction (e.g., the x-axis direction), a portion of the (1-1)^{th}inclined surface 2550a of the convex portion 2550c of the sliding module 2550 and a portion of the (2-2)^{th} inclined surface 560b of the convex portion 560c of the bracket 560 may be disposed to overlap each other.

According to an embodiment, when the first housing 210 and the third housing 230 are unfolded to form about 160° therebetween and a portion of the (1-1)^{th} inclined surface 2550a of the convex portion 2550c of the sliding module 2550 and a portion of the (2-2)^{th} inclined surface 560b of the convex portion 560c of the bracket 560 are disposed to overlap each other, the spring 570 may be partially expanded, and some of the N poles of the first magnet assembly 510 and some of the S poles and some of the N poles of the second magnet assembly 520 may be disposed to face each other. For example, because a portion of an attractive force and a portion of a repulsive force act between the first magnet assembly 510 and the second magnet assembly 520, a user may easily unfold the second housing 220 from the first housing 210.

FIG. 23E is a view schematically illustrating an operation of the sliding module according to various embodiments in a state in which the third housing is unfolded to form about 180° relative to the first housing of the multi-foldable electronic device according to various embodiments of the disclosure.

Referring to FIG. 23E, the multi-foldable electronic device 200 may be in the state in which the first housing 210 and the third housing 230 are unfolded to form about 180° (e.g., the first angle or the first predetermined angle) therebetween, and the first housing 210 and the second housing 220 are folded to each other.

According to an embodiment, when the first housing 210 and the third housing 230 are unfolded to form about 180° relative to each other through the second hinge structure 202, the bracket 560 including the first magnet assembly 510 may be disposed in the second direction (e.g., the -y-axis direction).

According to an embodiment, when the third housing 230 is unfolded to form about 180° relative to the first housing 210, the link 505 and the sliding module 2550 may be disposed in the third direction (e.g., the x-axis direction). When the sliding module 2550 is disposed in the third direction (e.g., the x-axis direction), the bracket 560 may be disposed in the second direction (e.g., the -y-axis direction). When the bracket 560 is disposed in the second direction (e.g., the -y-axis direction), the (1-1)^{th} flat surface 2551, the (1-1)^{th}inclined surface 2550a, and the (1-2)^{th} flat surface 2552 of the convex portion 2550c of the sliding module 2550 may be disposed to overlap the (2-1)^{th} flat surface 562, the (2-2)^{th} inclined surface 560b, and the (2-3)^{th} flat surface 563 of the convex portion 560c of the bracket 560.

According to an embodiment, when the first housing 210 and the third housing 230 are unfolded to form about 180° therebetween and the bracket 560 including the first magnet assembly 510 is disposed in the second direction (e.g., the -y-axis direction), the spring 570 may be expanded, and the N poles and the S poles of the first magnet assembly 510 may be disposed to face the S poles and the N poles of the second magnet assembly 520. For example, when the first magnet assembly 510 and the second magnet assembly 520 are arranged to have opposite polarities, an attractive force may act between the first magnet assembly 510 and the second magnet assembly 520.

Referring to FIGS. 23A to 23E, according to various embodiments, when the first housing 210 and the third housing 230 of the multi-foldable electronic device 200 are unfolded to form the first angle (e.g., about 180°) or the first predetermined angle, or folded to the third angle (e.g., about 90°) or the third predetermined angle therebetween, an attractive force may act between the first magnet assembly 510 disposed on the first housing 210 and the second magnet assembly 520 disposed on the second housing 220. When the first housing 210 and the third housing 230 are folded to form the third angle (e.g., about 110° to 170°) or the third predetermined angle therebetween, at least a portion of a repulsive force may act between the first magnet assembly 510 disposed on the first housing 210 and the second magnet assembly 520 disposed on the second housing 220. For example, when the first housing 210 and the third housing 230 are folded or unfolded to the third angle (e.g., about 110° to 170°), a user may easily unfold the second housing 220 from the first housing 210 due to at least a portion of the repulsive force acting between the first magnet assembly 510 disposed on the first housing 210 and the second magnet assembly 520 disposed on the second housing 220

FIG. 24 is a view schematically illustrating a magnet assembly and a sliding module of a multi-foldable electronic device according to various embodiments of the disclosure.

According to various embodiments, the multi-foldable electronic device 200 described below may include at least some of the embodiments described with reference to FIGS. 1 to 23E. Embodiments related to the multi-foldable electronic device 200 described below may, for example, be integrated into and applied to the embodiments of the multi-foldable electronic device 200 illustrated in FIGS. 2A to 23E. In the description of the multi-foldable electronic device 200 according to various embodiments of the disclosure described below, the same reference numerals are assigned to components that are substantially the same as the embodiments described above with reference to FIGS. 2A to 23E, and redundant descriptions of their functions may be omitted.

In the multi-foldable electronic device 200 according to various embodiments of the disclosure described below, the bracket 560 described above may be omitted.

Referring to FIG. 24, the multi-foldable electronic device 200 according to various embodiments of the disclosure may include a first magnet assembly 2410 (e.g., the first magnet assembly 510 of FIG. 5).

According to various embodiments, the first magnet assembly 2410 may be disposed in a groove 501 (e.g., the groove 501 of FIG. 10) formed in the first housing 210. The first magnet assembly 2410 may be disposed on the first surface 211 (e.g., the front surface in the z-axis direction) of the first housing 210. For example, the first magnet assembly 2410 may be disposed on the first surface 211 (e.g., the front surface in the z-axis direction) of the first housing 210 in the fourth direction (e.g., the -x-axis direction).

According to various embodiments, the first magnet assembly 2410 may include a (1-1)^{th} magnet assembly 2410a and a (1-2)^{th} magnet assembly 2410b. The (1-1)^{th}magnet assembly 2410a may include at least one magnet in which N poles and S poles are alternately arranged. The (1-2)^{th} magnet assembly 2410b may include at least one magnet in which S poles and N poles are alternately arranged.

According to various embodiments, the (1-1)^{th}magnet assembly 2410a may be packed using a first non-magnetic packing member 2420a. The (1-2)^{th}magnet assembly 2410b may be packed using a second non-magnetic packing member 2420b.

According to various embodiments, the (1-1)^{th} magnet assembly 2410a may include a first elastic member 2431 (e.g., a first spring) disposed in the first direction (e.g., the y-axis direction). The (1-1)^{th}magnet assembly 2410a may include a first convex portion 2411 disposed in the second direction (e.g., the -y-axis direction). The first convex portion 2411 may include at least one flat surface and at least one inclined surface.

According to various embodiments, the (1-2)^{th}magnet assembly 2410b may include a second convex portion 2412 disposed in the first direction (e.g., the y-axis direction). The second convex portion 2412 may include at least one flat surface and at least one inclined surface. The (1-2)^{th}magnet assembly 2410b may include a second elastic member 2432 (e.g., a second spring) disposed in the second direction (e.g., the -y-axis direction).

According to various embodiments, a sliding module 2400 may be disposed between the (1-1)^{th} magnet assembly 2410a and the (1-2)^{th} magnet assembly 2410b. The sliding module 2400 may be connected to a portion of the second hinge structure 202 through a link 505. The sliding module 2400 may perform a horizontal reciprocating movement (e.g., movement in the third direction (e.g., the x-axis direction) and the fourth direction (e.g., the - x-axis direction)) in response to a rotational movement of the second hinge structure 202.

According to various embodiments, the sliding module 2400 may include a first concave portion 2401 formed in the first direction (e.g., the y-axis direction). The first concave portion 2401 may include at least one flat surface and at least one inclined surface. The first concave portion 2401 may be formed to correspond to the first convex portion 2411.

According to various embodiments, the sliding module 2400 may include a second concave portion 2402 formed in the second direction (e.g., the -y-axis direction). The second concave portion 2402 may include at least one flat surface and at least one inclined surface. The second concave portion 2402 may be formed to correspond to the second convex portion 2412.

FIG. 25A is a view schematically illustrating an operation of a first magnet assembly and a sliding module according to various embodiments in a state in which a third housing is folded to form about 90° relative to a first housing in a multi-foldable electronic device according to various embodiments of the disclosure.

According to various embodiments, the multi-foldable electronic device 200 described below may include at least some of the embodiments described with reference to FIGS. 1 to 24. Embodiments related to the multi-foldable electronic device 200 described below may be integrated into and applied to, for example, the embodiments of the multi-foldable electronic device 200 illustrated in FIGS. 2A to 24. In the description of the multi-foldable electronic device 200 according to various embodiments of the disclosure described below, the same reference numerals are assigned to components that are substantially the same as, for example, the embodiments described above with reference to FIGS. 1 to 24, and redundant descriptions of their functions may be omitted.

According to various embodiments, the (1-1)^{th} magnet assembly 2410a illustrated in FIGS. 25A to 25E may include a first elastic member 2431 (e.g., a first spring) disposed in the first direction (e.g., the y-axis direction) and a first convex portion 2411 disposed in the second direction (e.g., the -y-axis direction). For example, the first convex portion 2411 may include a (1-1)^{th} inclined surface 2501, a (1-1)^{th}flat surface 2502, and a (1-2)^{th} inclined surface 2503.

According to various embodiments, the (1-2)^{th}magnet assembly 2410b may include a second convex portion 2412 disposed in the first direction (e.g., the y-axis direction) and a second elastic member 2432 (e.g., a second spring) disposed in the second direction (e.g., the -y-axis direction). For example, the second convex portion 2412 may include a (2-1)^{th} inclined surface 2531, a (2-1)^{th} flat surface 2532, and a (2-2)^{th}inclined surface 2533.

According to various embodiments, a sliding module 2400 may be disposed between the (1-1)^{th} magnet assembly 2410a and the (1-2)^{th} magnet assembly 2410b. The sliding module 2400 may be connected to a portion of the second hinge structure 202 through a link 505. The sliding module 2400 may perform a horizontal reciprocating movement (e.g., movement in the third direction (e.g., the x-axis direction) and the fourth direction (e.g., the - x-axis direction)) in response to a rotational movement of the second hinge structure 202.

According to various embodiments, the sliding module 2400 illustrated in FIGS. 25A to 25E (e.g., the sliding module 2400 of FIG. 24) may include a first concave portion 2401 formed in the first direction (e.g., the y-axis direction). The first concave portion 2401 may include a (1-1)^{th} flat surface 2511, a (1-1)^{th} inclined surface 2512, a (1-2)^{th} flat surface 2513, a (1-2)^{th}inclined surface 2514 and/or a (1-3)^{th}flat surface 2515.

According to various embodiments, the sliding module 2400 illustrated in FIGS. 25A to 25E (e.g., the sliding module 2400 of FIG. 24) may include a second concave portion 2402 formed in the second direction (e.g., the -y-axis direction). The second concave portion 2402 may include a (2-1)^{th}flat surface 2521, a (2-1)^{th}inclined surface 2522, a (2-2)^{th} flat surface 2523, a (2-2)^{th}inclined surface 2524 and/or a (2-3)^{th}flat surface 2525.

Referring to FIG. 25A, the multi-foldable electronic device 200 may be in the state in which the first housing 210 and the third housing 230 are folded to about 90° (e.g., the third angle or the third predetermined angle), and the first housing 210 and the second housing 220 are folded to each other.

According to an embodiment, when the first housing 210 and the third housing 230 are folded to about 90° through the second hinge structure 202, the link 505 and the sliding module 2400 may be disposed in the fourth direction (e.g., the -x-axis direction). When the sliding module 2400 is disposed in the fourth direction (e.g., the -x-axis direction), at least a portion of the (1-1)^{th} flat surface 2502 of the first convex portion 2411 of the (1-1)^{th}magnet assembly 2410a may be disposed on the (1-3)^{th} flat surface 2515 of the first concave portion 2401 of the sliding module 2400, and the (2-3)^{th} flat surface 2525 of the second concave portion 2402 of the sliding module 2400 may be disposed on the (2-1)^{th} flat surface 2532 of the second convex portion 2412 of the (1-2)^{th} magnet assembly 2410b.

According to an embodiment, when the first housing 210 and the third housing 230 are folded to about 90°, the first elastic member 2431 of the (1-1)^{th}magnet assembly 2410a and the second elastic member 2432 of the (1-2)^{th} magnet assembly 2410b may be contracted.

FIG. 25B is a view schematically illustrating an operation of the first magnet assembly and the sliding module according to various embodiments in a state in which the third housing is unfolded to form about 110° relative to the first housing in the multi-foldable electronic device according to various embodiments of the disclosure.

Referring to FIG. 25B, the multi-foldable electronic device 200 may be in the state in which the first housing 210 and the third housing 230 are unfolded to about 110° (e.g., within the second angle range), and the first housing 210 and the second housing 220 are folded to each other.

According to an embodiment, when the first housing 210 and the third housing 230 are unfolded to about 110° through the second hinge structure 202, the link 505 and the sliding module 2400 may move in the third direction (e.g., the x-axis direction). When the sliding module 2400 partially moves in the third direction (e.g., the x-axis direction), the (1-1)^{th} flat surface 2502 of the first convex portion 2411 of the (1-1)^{th} magnet assembly 2410a may be disposed on the (1-2)^{th}flat surface 2513 of the first concave portion 2401 of the sliding module 2400, and the (2-3)^{th} flat surface 2525 of the second concave portion 2402 of the sliding module 2400 may be disposed on a portion of the (2-1)^{th}flat surface 2532 of the second convex portion 2412 of the (1-2)^{th}magnet assembly 2410b.

According to an embodiment, when the first housing 210 and the third housing 230 are unfolded to about 110°, the first elastic member 2431 of the (1-1)^{th}magnet assembly 2410a may be partially expanded, and the second elastic member 2432 of the (1-2)^{th} magnet assembly 2410b may remain in the contracted state.

FIG. 25C is a view schematically illustrating an operation of the first magnet assembly and the sliding module according to various embodiments in a state in which the third housing is unfolded to form about 135° relative to the first housing in the multi-foldable electronic device according to various embodiments of the disclosure.

Referring to FIG. 25C, the multi-foldable electronic device 200 may be in the state in which the first housing 210 and the third housing 230 are unfolded to about 135° (e.g., within the second angle range), and the first housing 210 and the second housing 220 are folded to each other.

According to an embodiment, when the first housing 210 and the third housing 230 are unfolded to about 135° through the second hinge structure 202, the link 505 and the sliding module 2400 may move in the third direction (e.g., the x-axis direction). When the sliding module 2400 moves in the third direction (e.g., the x-axis direction), the (1-1)^{th} flat surface 2502 of the first convex portion 2411 of the (1-1)^{th}magnet assembly 2410a may be disposed on the (1-2)^{th} flat surface 2513 of the first concave portion 2401 of the sliding module 2400, and the (2-2)^{th}flat surface 2523 of the second concave portion 2402 of the sliding module 2400 may be disposed on the (2-1)^{th} flat surface 2532 of the second convex portion 2412 of the (1-2)^{th}magnet assembly 2410b.

According to an embodiment, when the first housing 210 and the third housing 230 are unfolded to about 135°, the first elastic member 2431 of the (1-1)^{th} magnet assembly 2410a and the second elastic member 2432 of the (1-2)^{th} magnet assembly 2410b may be expanded.

FIG. 25D is a view schematically illustrating an operation of the first magnet assembly and the sliding module according to various embodiments in a state in which the third housing is unfolded to form about 160° relative to the first housing in the multi-foldable electronic device according to various embodiments of the disclosure.

Referring to FIG. 25D, the multi-foldable electronic device 200 may be in the state in which the first housing 210 and the third housing 230 are unfolded to about 160° (e.g., within the second angle range), and the first housing 210 and the second housing 220 are folded to each other.

According to an embodiment, when the first housing 210 and the third housing 230 are unfolded to about 160° through the second hinge structure 202, the link 505 and the sliding module 2400 may partially move in the third direction (e.g., the x-axis direction). When the sliding module 2400 partially moves in the third direction (e.g., the x-axis direction), a portion of the (1-1)^{th}flat surface 2502 of the first convex portion 2411 of the (1-1)^{th} magnet assembly 2410a may be disposed on the (1-1)^{th}flat surface 2511 of the first concave portion 2401 of the sliding module 2400, and the (2-2)^{th} flat surface 2523 of the second concave portion 2402 of the sliding module 2400 may be disposed on the (2-1)^{th} flat surface 2532 of the second convex portion 2412 of the (1-2)^{th}magnet assembly 2410b.

According to an embodiment, when the first housing 210 and the third housing 230 are unfolded to about 160°, the first elastic member 2431 of the (1-1)^{th} magnet assembly 2410a may be contracted, and the second elastic member 2432 of the (1-2)^{th}magnet assembly 2410b may remain in the expanded state.

FIG. 25E is a view schematically illustrating an operation of the first magnet assembly and the sliding module according to various embodiments in a state in which the third housing is unfolded to form about 180° relative to the first housing of the multi-foldable electronic device according to various embodiments of the disclosure.

Referring to FIG. 25E, the multi-foldable electronic device 200 may be in the state in which the first housing 210 and the third housing 230 are unfolded to about 180° (e.g., the first angle or the first predetermined angle), and the first housing 210 and the second housing 220 are folded to each other.

According to an embodiment, when the first housing 210 and the third housing 230 are unfolded to about 180° through the second hinge structure 202, the link 505 and the sliding module 2400 may be disposed in the third direction (e.g., the x-axis direction). When the sliding module 2400 is disposed in the third direction (e.g., the x-axis direction), the (1-1)^{th} flat surface 2502 of the first convex portion 2411 of the (1-1)^{th}magnet assembly 2410a may be disposed on the (1-1)^{th} flat surface 2511 of the first concave portion 2401 of the sliding module 2400, and the (2-1)^{th} flat surface 2521 of the second concave portion 2402 of the sliding module 2400 may be disposed on the (2-1)^{th} flat surface 2532 of the second convex portion 2412 of the (1-2)^{th}magnet assembly 2410b.

According to an embodiment, when the first housing 210 and the third housing 230 are unfolded to about 180°, the first elastic member 2431 of the (1-1)^{th} magnet assembly 2410a and the second elastic member 2432 of the (1-2)^{th}magnet assembly 2410b may be contracted.

According to various embodiments of the disclosure, a multi-foldable electronic device 200 may include a first housing 210 that includes a first magnet assembly 510 configured to move to a first position (e.g., a first direction), and to a second position (e.g., a second direction), a second housing 220 that is foldably coupled to a first side of the first housing 210 and includes a second magnet assembly 520, and a third housing 230 that is foldably coupled to a second side of the first housing 210. According to an embodiment, the multi-foldable electronic device 200 may include a first hinge structure 201 that is coupled between the first housing 210 and the second housing 220 and a second hinge structure 202 that is coupled between the first housing 210 and the third housing 230. In an embodiment, the multi-foldable electronic device 200 may be configured such that, when the angle between the first housing 210 and the third housing 230 is a first angle, the first magnet assembly 510 may be disposed at the first position, and when the angle between the first housing 210 and the third housing 230 is a second angle, the first magnet assembly 510 may move to the second position and the first magnet assembly 510 and the second magnet assembly 520 may be arranged to face each other with substantially the same polarity.

According to an embodiment, the multi-foldable electronic device 200 may be configured such that, when the angle between the first housing 210 and the third housing 230 is the first angle and the first magnet assembly 510 is disposed at the first position, the first magnet assembly 510 and the second magnet assembly 520 may be arranged to have substantially opposite polarities.

According to an embodiment, the multi-foldable electronic device 200 may include a link 505 that has a first portion 505a connected to the second hinge structure 202, a sliding module 550 that is connected to a second portion 505b of the link 505 and moves in a horizontal direction in response to rotation of the second hinge structure 202, and a bracket 560 that moves in a first direction and a second direction in response to horizontal movement of the sliding module 550 and includes the first magnet assembly 510.

According to an embodiment, the sliding module 550 may include, at a first end thereof, a concave portion 550c that includes at least one flat surface and at least one inclined surface, and the bracket 560 may include, at a second end thereof, a convex portion 560c that includes at least one flat surface and at least one inclined surface.

According to an embodiment, the concave portion 550c of the sliding module 550 may include a (1-1)^{th}flat surface 551, a (1-1)^{th} inclined surface 550a, a (1-2)^{th} flat surface 552, a (1-2)^{th} inclined surface 550b, and a (1-3)^{th}flat surface 553, and the convex portion 560c of the bracket 560 may include a (2-1)^{th}flat surface 561, a (2-1)^{th} inclined surface 560a, a (2-2)^{th} flat surface 562, a (2-2)^{th}inclined surface 560b, and a (2-3)^{th} flat surface 563.

According to an embodiment, the bracket 560 may be disposed in a groove 501 formed in a first surface 211 of the first housing 210.

According to an embodiment, the multi-foldable electronic device 200 may be configured such that, when the angle between the first housing 210 and the third housing 230 is a third angle and the first magnet assembly 510 is disposed adjacent to the first position, the first magnet assembly 510 and the second magnet assembly 520 may be arranged to have substantially opposite polarities.

According to an embodiment, the multi-foldable electronic device 200 may be configured such that when the angle between the first housing 210 and the third housing 230 is a fourth angle and the first magnet assembly 510 is disposed adjacent to the first position, the first magnet assembly 510 and the second magnet assembly 520 may be arranged to have substantially opposite polarities.

According to an embodiment, the multi-foldable electronic device 200 may be configured such that a repulsive force acts between the first magnet assembly 510 and the second magnet assembly 520 when the angle between the first housing 210 and the third housing 230 is the second angle and the first magnet assembly 510 moves to the second position.

According to an embodiment, the multi-foldable electronic device 200 may be configured such that an attractive force acts between the first magnet assembly 510 and the second magnet assembly 520 when the angle between the first housing 210 and the third housing 230 is the first angle and the first magnet assembly 510 is disposed at the first position.

According to an embodiment, the multi-foldable electronic device 200 may include an elastic member 570 that is disposed between a first end of the bracket 560 and a first end 210e of the groove 501.

According to an embodiment, the first angle may include an angle at which the first housing 210 and the third housing 230 are unfolded to substantially form 180 degrees therebetween and the second angle may include a folded angle range in which the first housing 210 and the third housing 230 are folded to substantially form 110 degrees to 170 degrees therebetween.

According to an embodiment, the first magnet assembly 510 may be disposed on the first surface 211 of the first housing 210, and the second magnet assembly 520 may be disposed on a third surface 221 of the second housing 220.

According to an embodiment, the second housing 220 may further include a third magnet assembly 530 that is disposed on a fourth surface 222 opposite to the third surface 221 and the third housing 230 may include a fourth magnet assembly 540 that is disposed on a fifth surface 231.

According to an embodiment, the first magnet assembly 510 may include at least one magnet in which N poles and S poles are alternately arranged and the second magnet assembly 520 may include at least one magnet in which S poles and N poles are alternately arranged.

According to an embodiment, the bracket 560 may include a guide hole 5108 that forms a space in the first surface of the first housing 210 so as to allow movement to the first position (e.g., a first direction), and to the second position (e.g., a second direction), and the bracket 560 may be configured to be disposed in the groove 501 formed in the first surface 211 of the first housing 210 through a screw 5105 inserted into the guide hole 5108.

According to an embodiment, the first magnet assembly 510 and/or the second magnet assembly 520 may be configured to be surrounded by a non-conductive molding member 580.

According to an embodiment, the first magnet assembly 510 and the second magnet assembly 520 may include a shielded magnet 1200 surrounded by a shielding member 1220 or a Halbach magnet 1300.

According to an embodiment, the sliding module 550 may be configured to be disposed at a third direction through the link 505 when the angle between the first housing 210 and the third housing 230 is the first angle.

According to an embodiment, the sliding module 550 may be configured to move to a fourth direction opposite to the third direction through the link 505 when the angle between the first housing 210 and the third housing 230 is the second angle.

In the foregoing, the disclosure has been described with reference to various embodiments of the disclosure, but it is evident that changes and modifications made by a person ordinarily skilled in the art to which the disclosure belongs without departing from the technical spirit of the disclosure fall within the scope of the disclosure.

## Claims

1. A multi-foldable electronic device (200) comprising:
a first housing (210) comprising a first magnet assembly (510) configured to be movable to a first position or a second position;
a second housing (220) foldably coupled to a first side of the first housing (210) and comprising a second magnet assembly (520);
a third housing (230) foldably coupled to a second side of the first housing (210);
a first hinge structure (201) coupled between the first housing (210) and the second housing (220); and
a second hinge structure (202) coupled between the first housing (210) and the third housing (230),
wherein, in case that an angle between the first housing (210) and the third housing (230) is a first angle, the first magnet assembly (510) is disposed at the first position, and
wherein, in case that the angle between the first housing (210) and the third housing (230) is a second angle, the first magnet assembly (510) moves to the second position such that the first magnet assembly (510) and the second magnet assembly (520) are arranged to face each other with substantially the same polarity.

2. The multi-foldable electronic device of claim 1, wherein, in case that the angle between the first housing (210) and the third housing (230) is the first angle and the first magnet assembly (510) is disposed at the first position, the first magnet assembly (510) and the second magnet assembly (520) are arranged to have substantially opposite polarities.

3. The multi-foldable electronic device of claim 1 or claim 2, further comprising:
a link (505) having a first portion (505a) connected to the second hinge structure (202);
a sliding module (550) connected to a second portion (505b) of the link (505) and configured to move in a horizontal direction in response to rotation of the second hinge structure (202); and
a bracket (560) configured to move in a first direction and a second direction in response to the horizontal movement of the sliding module (550) and comprising the first magnet assembly (510),
wherein the sliding module (550) comprises a concave portion (550c) at a first end thereof, the concave portion (550c) comprising at least one flat surface and at least one inclined surface, and
wherein the bracket (560) comprises a convex portion (560c) at a second end thereof, the convex portion (560c) comprising at least one flat surface and at least one inclined surface.

4. The multi-foldable electronic device of claim 3, wherein the bracket (560) is disposed in a groove (501) formed in a first surface (211) of the first housing (210), and
wherein an elastic member (570) is disposed between a first end of the bracket (560) and a first end (210e) of the groove (501).

5. The multi-foldable electronic device of any one of claims 1 to 4, wherein, in case that an angle between the first housing (210) and the third housing (230) is a third angle and the first magnet assembly (510) is positioned adjacent to the first position, the first magnet assembly (510) and the second magnet assembly (520) are arranged to face each other with substantially opposite polarities.

6. The multi-foldable electronic device of any one of claims 1 to 5, wherein, in case that an angle between the first housing (210) and the third housing (230) is a fourth angle and the first magnet assembly (510) is positioned adjacent to the first position, the first magnet assembly (510) and the second magnet assembly (520) are arranged to face each other with substantially opposite polarities.

7. The multi-foldable electronic device of any one of claims 1 to 6, wherein the multi-foldable electronic device is configured such that a repulsive force acts between the first magnet assembly (510) and the second magnet assembly (520) in case that the angle between the first housing (210) and the third housing (230) is the second angle and the first magnet assembly (510) moves to the second position.

8. The multi-foldable electronic device of any one of claims 1 to 7, wherein the multi-foldable electronic device is configured such that an attractive force acts between the first magnet assembly (510) and the second magnet assembly (520) in case that the angle between the first housing (210) and the third housing (230) is the first angle and the first magnet assembly (510) is disposed at the first position.

9. The multi-foldable electronic device of any one of claims 1 to 8, wherein the first angle comprises an angle at which the first housing (210) and the third housing (230) are unfolded to be substantially 180 degrees, and
wherein the second angle comprises a folded angle range in which the first housing (210) and the third housing (230) are folded to be substantially 110 degrees to 170 degrees.

10. The multi-foldable electronic device of any one of claims 1 to 9, wherein the first magnet assembly (510) is disposed on a first surface (211) of the first housing (210),
wherein the second magnet assembly (520) is disposed on a third surface (221) of the second housing (220),
wherein the second housing (220) further comprises a third magnet assembly (530) disposed on a fourth surface (222) opposite to the third surface (221), and
wherein the third housing (230) comprises a fourth magnet assembly (540) disposed on a fifth surface (231).

11. The multi-foldable electronic device of any one of claims 1 to 10, wherein the first magnet assembly (510) comprises at least one magnet having N poles and S poles alternately arranged, and
wherein the second magnet assembly (520) comprises at least one magnet having S poles and N poles alternately arranged.

12. The multi-foldable electronic device of any one of claims 1 to 4, wherein the bracket (560) comprises a guide hole (5108) in a first surface of the first housing (210), the guide hole (5108) forming a space configured to allow the bracket (560) to move to the first position and the second position, and
wherein the bracket (560) is disposed in the groove (501) formed in the first surface (211) of the first housing (210) through a screw (5105) inserted into the guide hole (5108).

13. The multi-foldable electronic device of any one of claims 1 to 12, wherein the first magnet assembly (510) and/or the second magnet assembly (520) is configured to be surrounded by a non-conductive molding member (580).

14. The multi-foldable electronic device of any one of claims 1 to 13, wherein the first magnet assembly (510) and the second magnet assembly (520) comprise a shielded magnet (1200) surrounded by a shielding member (1220) or a Halbach magnet (1300).

15. The multi-foldable electronic device of claim 3, wherein the sliding module (550) is configured to be disposed at a third position through the link (505) in case that the angle between the first housing (210) and the third housing (230) is the first angle, and
wherein the sliding module (550) is configured to move to a fourth position opposite to the third position through the link (505) in case that the angle between the first housing (210) and the third housing (230) is the second angle.
